# EUROPEAN PATENT APPLICATION

(11) **EP 4 557 030 A1**
(43) Date of publication of application: **21.05.2025**
(21) Application number: 23210301.0
(22) Date of filing: 16.11.2023
(51) Int. Cl.: G05B 19/418

(54) **APPARATUS, COMPUTER IMPLEMENTED METHOD AND PROGRAM STORAGE MEDIUM FOR SUPPORTING SAFETY DESIGN**

(71) Applicant: DENSO CORPORATION, Aichi-pref. 448-8661 (JP); Fraunhofer-Gesellschaft zur Förderung der angewandten Forschung e.V., 80686 München (DE)
(72) Inventor: OTANI, Toru, Kariya-city, Aichi-pref.,, 448-8661 (JP); KITAGAWA, Tomonori, Kariya-city, Aichi-pref.,, 448-8661 (JP); EL-SHAMOUTY, Mohamed, 80686 München (DE); AWAD, Ramez, 80686 München (DE); KOCH, Thomas, 80686 München (DE)
(74) Representative: Winter, Brandl - Partnerschaft mbB

(57) **Abstract**

A support apparatus (1) inputs static data of facilities and dynamic data of the facilities to a control device (2). The support apparatus (1) includes a display device (31) as an output device (3). The control device (2) displays a transient contact risk area image and/or a quasi-static contact risk area image on an image of the facilities in an evaluation target space. If the transient contact risk area image is displayed, an evaluator intuitively understands an existence of the transient contact and a location of the transient contact. If the quasi-static contact risk area image is displayed, the evaluator intuitively understands an existence of the quasi-static contact and a location of the quasi-static contact. As a result, the evaluator can consider measures against the transient contact and/or the quasi-static contact.

## Description

### TECHNICAL FIELD

The disclosure in this specification relates to an apparatus, method, and program storage medium for supporting safety design for facilities.

### BACKGROUND

Patent Literature 1 and Patent Literature 2 disclose a risk assessment method for a robot device. Patent Literature 1 simulates a collision between the robot device and a human. In the simulation, a transient contact and a quasi-static contact are calculated. The disclosure of Patent Literature is incorporated herein by reference to explain technical elements described herein.

### RELATED ART LITERATURE

### PATENT LITERATURE

Patent Literature 1: JP2020-82307A
Patent Literature 2: Development of a Simulation-based Risk Assessment Tool for HRC Applications, Conference Paper June 2022 International Symposium on Robotics (ISR) 2022

### SUMMARY

According to the technology of Patent Literature 1, it is difficult to sufficiently support the risk assessment procedure. From one aspect, with the technology of Patent Literature 1, there are cases where humans cannot intuitively grasp a location of a collision. From another aspect, the technique disclosed in Patent Literature 1 may lack information regarding a degree of collision. From yet another aspect, it is difficult to re-evaluate in a case that a protective device is added to reduce the risk. With the technique of Patent Document 2, it is difficult to grasp both the risk of transient contact and the risk of quasi-static contact. In the above-mentioned aspects, and in other aspects not mentioned, further improvements are needed in an apparatus, method, and program storage medium for supporting safety design for facilities.

It is an object of the disclosure to provide an apparatus, method, and program storage medium for supporting safety design for facilities that are capable of providing useful information for safety design.

An apparatus disclosed herein is an apparatus for supporting a safety design of facilities, the apparatus comprising: a control device (2) having at least one processor; a display device (31) which displays display content controlled by the control device; and an input device (4) which inputs data to the control device, wherein the control device is configured to provide: a facilities data acquisition unit (25a) which acquires facilities data of facilities in target evaluation space from the input device; a reach determination unit (25b) which determines a reach area that a target person can reach in the target evaluation space based on the facilities data; a motion determination unit (25c) which determines a motion area indicating movement of the facilities based on the facilities data; a risk determination unit (25d) which determines a risk area where interference between the facilities and the target person is expected; and a display process unit (25f) which displays the facilities arranged in the target evaluation space and the risk area in the target evaluation space in an overlapping manner on the display device, and wherein the interference includes a transient contact in which the facility and the target person come into contact with each other transiently, and a quasi-static contact in which the facility and the target person come into contact with each other in a quasi-static manner, and wherein the risk area includes a transient contact risk area where the transient contact is assumed and a quasi-static contact risk area where the quasi-static contact is assumed, and wherein the display process unit is configured to display the transient contact risk area and the quasi-static contact risk area in an overlapping manner and in a distinguishable manner.

According to the device disclosed herein, the facilities arranged in the target evaluation space and the risk area in the target evaluation space are displayed in an overlapping manner on the display device. Therefore, the apparatus is capable of providing useful information for safety design.

A method disclosed herein is a computer implemented method for supporting safety design of facilities, executed in a control device (2) having at least one processor, the method comprising: acquiring facilities data of facilities in a target evaluation space from an input device; determining a reach area that a target person can reach in the target evaluation space based on the facilities data; determining a motion area indicating movement of the facilities based on the facilities data; determining a risk area where interference between the facilities and the target person is expected; and displaying the facilities arranged in the target evaluation space and the risk area in the target evaluation space in an overlapping manner on a display device, and wherein the interference includes a transient contact in which the facility and the target person come into contact with each other transiently, and a quasi-static contact in which the facility and the target person come into contact with each other in a quasi-static manner, and wherein the risk area includes a transient contact risk area where the transient contact is assumed and a quasi-static contact risk area where the quasi-static contact is assumed, and wherein the displaying display the transient contact risk area and the quasi-static contact risk area in an overlapping and in a distinguishable manner on the display device.

A storage medium disclosed herein is a non-transitory computer-readable storage medium storing computer-readable instructions executable by a processor of an apparatus for supporting a safety design of facilities, the instructions being configured to, when executed by the processor, cause the apparatus to: acquire facilities data of facilities in a target evaluation space from an input device; determine a reach area that a target person can reach in the target evaluation space based on the facilities data; determining a motion area indicating movement of the facilities based on the facilities data; determine a risk area where interference between the facilities and the target person is expected; and display the facilities arranged in the target evaluation space and the risk area in the target evaluation space in an overlapping manner on a display device, and wherein the interference includes a transient contact in which the facility and the target person come into contact with each other transiently, and a quasi-static contact in which the facility and the target person come into contact with each other in a quasi-static manner, and wherein the risk area includes a transient contact risk area where the transient contact is assumed and a quasi-static contact risk area where the quasi-static contact is assumed, and wherein the instructions are configured to cause the display process unit to display the transient contact risk area and the quasi-static contact risk area in an overlapping manner and in a distinguishable manner.

The disclosed aspects in this specification adopt different technical solutions from each other in order to achieve their respective objectives. Reference numerals in parentheses described in claims and this section exemplarily show corresponding relationships with parts of embodiments to be described later and are not intended to limit technical scopes. The objectives, features, and effects disclosed herein are further clarified by reference to the subsequent detailed description and accompanying drawings.

### BRIEF DESCRIPTION OF THE DRAWINGS

FIG. 1 is a block diagram of an apparatus for supporting safety design according to a first embodiment.
FIG. 2 is a graph showing an example of a transient contact.
FIG. 3 is a graph showing an example of a quasi-static contact.
FIG. 4 is a flowchart showing a safety design procedure.
FIG. 5 is a flowchart showing processing based on primary facilities data.
FIG. 6 is a flowchart showing processing based on secondary facilities data.
FIG. 7 is a flowchart showing details of FIG. 5 and FIG. 6.
FIG. 8 is a flowchart showing details of FIG. 6.
FIG. 9 is a plan view showing an example of a motion area image.
FIG. 10 is a plan view showing an entry area.
FIG. 11 is a plan view showing an example of a reachable area image.
FIG. 12 is a plan view showing an example of a transient contact risk area image.
FIG. 13 is a plan view showing an example of a quasi-static contact risk area image.
FIG. 14 is a plan view showing an example of an overlap between a transient contact risk area image and a quasi-static contact risk area image.
FIG. 15 is a plan view showing an example of an added protection device.
FIG. 16 is a plan view showing an entry area in FIG. 15.
FIG. 17 is a plan view showing another example of an added protection device.
FIG. 18 is a plan view showing an example of a reach area image in FIG. 17.
FIG. 19 is a plan view showing an example of a transient contact risk area image in FIG. 17.
FIG. 20 is a plan view showing an example of a quasi-static contact risk area image in FIG. 17.
FIG. 21 is a plan view showing another example of an overlap between a transient contact risk area image and a quasi-static contact risk area image.
FIG. 22 is a table showing an example of displaying physical quantities of a transient contact.
FIG. 23 is a table showing an example of displaying physical quantities of a quasi-static contact.

### DETAILED DESCRIPTION

A plurality of embodiments are described with reference to the drawings. In some embodiments, functionally and/or structurally corresponding and/or associated elements may be given the same reference numerals, or reference numerals with different digit placed on equal to or higher than a hundred place. With respect to the parts that correspond to or are associated with each other, explanations thereof can be shared among the embodiments.

### First Embodiment

In the following description, ISO, Visual Components, Oktopuz, and WINCAPS may be trademarks or registered trademarks.

### Support Apparatus

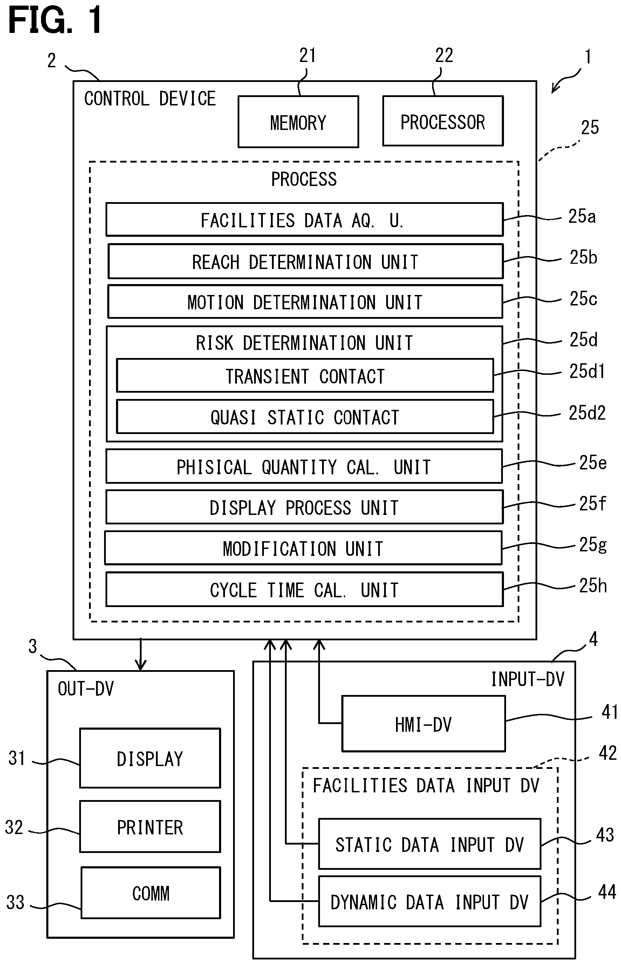

In FIG. 1, a system includes a support apparatus 1 which supports design activities to improve safety of facilities for humans. The support apparatus 1 includes a control device 2, an output device 3, and an input device 4. The support apparatus 1 is used for a risk assessment procedure to evaluate a risk of physical interference between a movable facility and a target person in a target evaluation space. Further, the support apparatus 1 is used for a risk assessment procedure to re-evaluate a risk of physical interference between the target person and improved facilities whose safety has been improved by reflecting a result of previous risk assessment procedure. As a result, safety of the facilities is improved. In the following description, a support apparatus 1 for supporting safety design and a method for supporting safety design executed in the support apparatus 1 are described and explained. Furthermore, in the following description, a method for supporting safety design, a method implemented by a computer, a program for executing the method on the support apparatus 1, and a storage medium on which the program is stored are described and explained.

Here, the target evaluation space is a space in which a person performs some kind of work. The target evaluation space may include production facilities, repair facilities, offices, mines, construction sites, hospitals, nursing care sites, etc. The target person is a human who is a subject of risk assessment procedures. The target person may include a worker in the target evaluation space or visitors who may temporarily enter the facilities in the target evaluation space. One example of the target person is a collaborative worker in a human robot collaboration environment.

The facilities may be things placed in the target evaluation space. The facilities include stationary facilities which are stationary relative to the target person. The stationary facilities may include shelves, partitions, fences, parts stations, etc. Additionally, the facilities include a movable facility having a movable member which is movable relative to the target person and a stationary portion which is stationary relative to the target person. The movable facilities may include processing machines such as lathes and milling machines, transport equipment such as parts feeders, conveyors and automatic guided vehicles, and robot devices such as multi-joint robots. Further, the movable facilities include a combination device which combines at least two of a processing machine, a transfer device, and a robot device. The movable facilities include, for example, a mobile manipulator which is a combination of an automatic guided vehicle and at least one robot device. Note that the movable facilities are equipment that are actively moved. Therefore, hand trolleys and the like that are passively moved by being pushed or pulled by a person are classified as stationary facilities. The facilities are indicated by facilities data. The facilities data includes static data and dynamic data. The static data indicates locations, shapes, etc. of stationary facilities and stationary members of the movable facilities. Dynamic data indicates a direction of movement, a speed of movement, a track of movement, etc. regarding the movable member.

A physical interference between the movable facility and a portion of the target person includes a physical contact between the movable facility and the portion of the target person, and a physical collision between the movable facility and the portion of the target person. Additionally, an interference may include a transient contact between the mobile facility and the portion of the target person and a quasi-static contact between the mobile facility and the portion of the target person. The transient contact may include a phenomenon in which a portion of the target person may be hit by the movable facility. The quasi-static contact may include a phenomenon of the portion of the target person "sandwiching" between the facilities.

The support apparatus 1 generates support information used by an evaluator and/or an evaluation device in risk assessment procedure, and provides the generated support information to the evaluator and/or the evaluation device. The evaluator is users who use the support apparatus 1. The evaluation device is a computer device different from the support apparatus 1. Therefore, the evaluation device has the same configuration as the control device 2 described later. If the support apparatus 1 provides support information to the evaluator, the support apparatus 1 outputs image information including an image showing a three-dimensional shape of the facilities and/or numerical information showing a degree of interference to a human-machine interface. If the support apparatus 1 provides support information to the evaluation device, the support apparatus 1 outputs data such as positions and shapes of facilities and/or numerical data indicating the degree of interference to the evaluation device.

### Control Device

The control device 2 is provided by a microcomputer including a memory 21 and a processor 22. The memory 21 is provided by a semiconductor memory, a hard disk, or the like. The processor 22 is provided by a so-called CPU. The control device 2 executes a plurality of control processes 25 by executing a plurality of instructions by at least one processor 22.

The control device 2 in this description may also be called as an electronic control device (ECU). The control device or a control system is provided by (a) an algorithm as a plurality of logic called an if-then-else form, or (b) a learned model tuned by machine learning, e.g., an algorithm as a neural network.

The control device is provided by a control system including at least one computer. The control system may include a plurality of computers linked by data communication devices. The computer includes at least one processor (hardware processor) that is hardware. The hardware processor may be provided by the following (i), (ii), or (iii).
(i) The hardware processor may be at least one processor 22 that executes a program stored in at least one memory 21. In this case, the computer is provided by at least one memory 21 and at least one processor 22. The processor 22 is called a central processing unit (CPU), a graphics processing unit (GPU), a RISC-CPU, or the like. The memory 21 may be also referred to as a storage medium. The memory 21 is a non-transitory and tangible storage medium, which non-temporarily stores a program and/or data readable by the processor 22. The storage medium may be a semiconductor memory, a magnetic disk, an optical disk, or the like. The program may be distributed as a single unit or as a storage medium in which the program is stored.
(ii) The hardware processor may be a hardware logic circuit. In this case, the computer is provided by a digital circuit including a number of programmed logic units (gate circuits). The digital circuit is also called a logic circuit array, for example, ASIC: Application-Specific Integrated Circuit, FPGA: Field Programmable Gate Array, SoC: System on a Chip, PGA: Programmable Gate Array, or CPLD: Complex Programmable Logic Device. The digital circuit may comprise a memory storing programs and/or data. The computer may be provided by an analog circuit. A computer may be provided by a combination of a digital circuit and an analog circuit.
(iii) The hardware processor may be a combination of the above (i) and the above (ii). (i) and (ii) are placed on different chips or on a common chip. In these cases, the part (ii) is also called an accelerator.

The control device, the signal source, and the control object provide various elements. At least some of these elements may be referred to as blocks, modules, or sections. Furthermore, elements included in the control system are referred to as functional means only when intentional.

### Control Process

The control process 25 includes a facilities data acquisition unit 25a. The facilities data acquisition unit 25a acquires facilities data of the facilities in the target evaluation space from the input device 4. The facilities data includes static data and dynamic data.

The control process 25 includes a reach determination unit 25b. The reach determination module 25b determines a reachable area that the target person can reach in the target evaluation space based on the facilities data.

The reachable area is an area where it may be assumed that the target person could enter the target evaluation space and/or an area where it may be assumed that the target person could position a portion of his or her body in the target evaluation space. Here, a portion of a body of the target person may include the head, hands, torso, legs, etc., as well as eyes positioned to look through holes in the facilities, nose positioned to sniff, etc.

The control process 25 includes a motion determination unit 25c. The motion determination unit 25c determines motion areas indicating motion of the facilities based on the facilities data. The motion area is mainly set based on the dynamic data. The motion area is a planned motion area that indicates planned operation tracks of the movable member of the facility. The planned motion area is different from the maximum motion area in which the movable member of the facility can be reached. The planned motion area is a part of the area included in the maximum motion area.

The reach determination unit 25b determines the reach area by estimating a route along which the target person can move toward the movable portion of the facility. The reach determining unit 25b sets a plurality of entry points in an access area in the facility where the target person can enter. The reach determination unit 25b assumes a plurality of routes for the target person to take from a plurality of entry points to the movable portion of the facility. The reach determining unit 25b narrows down a plurality of routes based on conditions such as a responsiveness of the facility, a time required to reach a safe speed, a safe distance between the target person and the facility, and a presence of a protective device. In this way, the reach determination unit 25b determines the reach area. Algorithms for determining the reach area may be provided by a variety of algorithms available for optimization problems. In this embodiment, the reach determination unit 25b determines the reach area using a branch and bound method.

The control process 25 includes a risk determination unit 25d. The risk determination unit 25d determines a risk area where interference between the facilities and the target person is expected. The risk determination unit 25d determines a risk area from the reach area and the motion area. The risk determination module 25d predicts interference between the movable member and the portion of the target person. The risk areas where interferences are concerned are provided to the evaluator or the evaluation device. The risk areas where interferences are concerned are stored in the memory 21. The risk areas may be represented as a collection of multiple interference points. One interference point indicates a representative interference position in a predetermined volume of space. One interference point may be provided, for example, by a cube (voxel) with a predetermined volume. The risk areas can be represented as a collection of multiple voxels.

One form of interference is collision. For example, it may be assumed that the movable member of the movable facility collides with a portion of the target person in a stationary state. In a collision, the portion of the target person may be pushed and moved in a moving direction of the movable member due to a reaction when the facility and the portion of the target person collide. The collision includes a transient contact. The transient contact is also called "hitting". "Hitting" is a state in which, for example, the facility collides with the portion of the target person, and the portion of the target person is forcibly moved by the reaction of the collision. The collision includes a quasi-static contact. The quasi-static contact is also called "sandwiching". "Sandwiching" is a state in which, for example, the facility collides with the portion of the target person, and the portion of the target person is moved by the reaction of the collision, and the portion of the target person is sandwiched between a plurality of facilities. Here, it may be assumed that a case where the portion of the target person is sandwiched between the movable facility and the stationary facility and a case where the portion of the target person is sandwiched between the movable facility and another one of the movable facility. Furthermore, one aspect of interference is a pulling. For example, it may be assumed that the target person tracks and grasps the movable member of the movable facility. In this case, the portion of the target person is pulled in the direction of movement of the movable member. The risk area includes a transient contact risk area where a transient contact is expected. The risk determination unit 25d includes a transient contact risk area determination unit 25d1. The transient contact risk area determination unit determines a transient contact risk area where a transient contact is assumed.

The risk area includes a quasi-static contact risk area where a quasi-static contact is assumed. The risk determination unit 25d includes a quasi-static contact risk area determination unit 25d1. The quasi-static contact risk area determination unit determines a quasi-static contact risk area where a quasi-static contact is assumed.

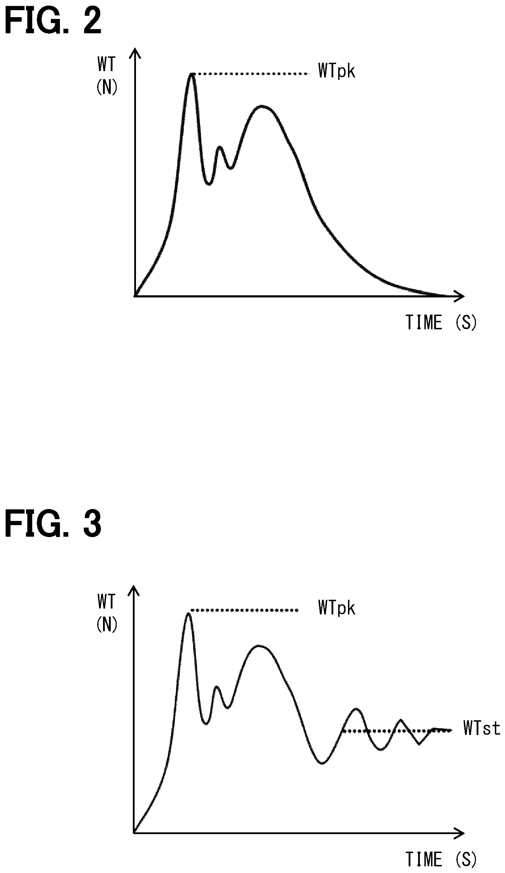

FIG. 2 shows an example of a collision force WT (load) (N) that is applied to a portion of the target person in an interference called "hitting". The collision force is also called a load. In the following explanation, it may be referred to as collision force. The physical quantity of interference calculated in a "hitting risk area" may include at least an instantaneous maximum collision force WTpk of the collision force WT (N) of "being hit". The physical quantity of interference calculated in the "hitting risk area" may include multiple items. For example, not only the instantaneous maximum collision force (N), but also a relative velocity at the time of collision (m/sec), an amount of energy transferred from the movable facility to the target person (J), and a pressure the target person receives (N/mm^2) may additionally be included. These physical quantities can be calculated by simulating the collision between the movable facility and the target person on a three-dimensional model. Hereinafter, the three dimension may be referred to as 3D. In this simulation, at least one of the following is considered: a moving direction of the movable facility, a moving speed of the movable facility, a weight of the movable facility including a thing transported by the movable facility, and a surface area of a contact surface when a collision occurs.

FIG. 3 shows an example of a collision force WT (load) (N) that is applied to a portion of the target person in an interference called "sandwiching". The physical quantity of interference calculated in the "sandwiching risk area" may include at least a steady collision force WTst(N) of the "sandwiching". The steady collision force WTst is also called the residual load that remains steadily after the occurrence of "sandwiching". The physical quantity of interference calculated in the "sandwiching risk area" may include multiple items. For example, not only the steady collision force WTst (N), but also a relative velocity at the time of collision (m/sec), an amount of energy transferred from the movable facility to the target person (J), and a pressure the target person receives (N/mm^2) may additionally be included. These physical quantities can be calculated by simulating the collision between the movable facility and the target person on a 3D model. In this simulation, at least one of the following is considered: a moving direction of the movable facility, a moving speed of the movable facility, a weight of the movable facility including a thing transported by the movable facility, and a surface area of a contact surface when a collision occurs. The interference called "sandwiching" may be also called "entrapping." Returning to FIG. 1, the control process 25 includes a physical quantity calculation unit 25e. The physical quantity calculation unit 25e calculates and determines the physical quantity that the target person receives due to interference. In other words, the physical quantity calculation unit 25e calculates a physical quantity indicating a degree of interference in the risk area. The calculated value of physical quantity is provided to the evaluator or the evaluation device. The calculated value of physical quantity is stored in the memory 21. The physical quantity of interference is calculated and provided at each of the plurality of interference points. For example, the physical quantity of interference is calculated and provided to each of the plurality of voxels.

The control process 25 includes a display process unit 25f. The display process unit 25f displays the facilities arranged in the target evaluation space and the risk area in the target evaluation space in an overlapping manner on the display device of the output device 3. The display process unit 25f presents support information to the evaluator. The display process unit 25f may be additionally provided also if it is configured to provide the support information to the evaluation device.

The display process unit 25f displays the support information on the display device of the output device 3. The support information may include a virtual space image. The virtual space image shows the target evaluation space. The support information may include a static image showing the positions and shapes of the facilities in the target evaluation space. The support information may include the motion area image that indicates the motion area of the movable member of the facility in the target evaluation space. The support information may include a reach area image indicating an area that the target person can reach in the target evaluation space. This reach area image is also called an intrusion area image indicating an intrusion area into which the target person can enter. The support information may include a risk area image showing a risk area where interference between the movable member of the facility and the target person may be expected in the target evaluation space.

The support information may include one or more interference physical quantities calculated by the physical quantity calculation unit 25e. In this case, the display process unit 25f is configured to display the physical quantity of interference. The physical quantities of interference may be displayed, for example, in a table format.

For example, the support information is displayed in an overlapping manner on a basic image including a virtual space image and a static image. For example, the motion area image is displayed in an overlapping manner on the basic image. According to this configuration, the evaluator may intuitively understand a relationship between the movable member and the facilities including the positions and the shapes. For example, the reach area image is displayed in an overlapping manner on the basic image. According to this configuration, the evaluator may intuitively understand a relationship between the positions and the shapes of the facilities and the reach area of the target person. For example, the risk area image is displayed in an overlapping manner on the basic image. According to this configuration, the evaluator may intuitively understand a relationship between the positions and the shapes of the facilities and areas where the target person may be in risk.

Furthermore, in addition to the basic image, multiple images of support information may be displayed in an overlapping manner. For example, the motion area image and the reach area image are displayed in an overlapping manner on the basic image. According to this configuration, the evaluator may intuitively understand a relationship between the movable members of the facilities and the target person. For example, the motion area image and the risk area image are displayed in an overlapping manner on the basic image. According to this configuration, the evaluator may intuitively understand a relationship between the movable members of the facilities and interference. For example, the reach area image and the risk area image are displayed in an overlapping manner on the basic image. According to this configuration, the evaluator may intuitively understand a relationship between the target person and the interference. Furthermore, for example, the motion area image, the reach area image, and the risk area image are displayed in an overlapping manner on the basic image. According to this configuration, the evaluator may intuitively understand a relationship between the movable members of the facilities and the target person.

At least one of the motion area image, the reach area image, and the risk area image may be displayed by arranging a plurality of voxels in the virtual space image. The risk area image may include a "hitting risk area image" in which a transient contact may occur. The risk area image may include a "sandwiching risk area image" in which the quasi-static contact may occur. The risk area image may include the "hitting risk area image" and/or the "sandwiching risk area image". The "hitting risk area image" is also called a transient contact risk area image. The "sandwiching risk area image" is also called a quasi-static contact risk area image.

The display process unit 25f is configured to display the transient contact risk area image and the quasi-static contact risk area image in an overlapping manner. Moreover, the display process unit 25f is configured to display the transient contact risk area image and the quasi-static contact risk area image in a distinguishable manner by human vision. As a result, the evaluator can recognize that the quasi-static contact risk area exists within the transient contact risk area in the display image. Therefore, the display process unit 25f is configured to display the transient contact risk area and the quasi-static contact risk area in an overlapping manner and in a distinguishable manner.

The display process unit 25f may be configured to display the reach area and/or the motion area in addition to the facilities and the risk area. In this case, the display process unit 25f is configured to display at least two areas that are displayed simultaneously in a distinguishable manner by human vision.

If the support information includes the physical quantity of interference, the support information may include the physical quantity of interference in the "hitting risk area image". If the support information includes the physical quantity of interference, the support information may include the physical quantity of interference in the "sandwiching risk area image". The support information may include the physical quantity of interference in a "hitting risk area" and/or a physical quantity of interference in a "sandwiching risk area".

Furthermore, the control process 25 may include a modification unit 25g. The modification unit 25g modifies the facilities data acquired by the facilities data acquisition unit 25a and generates modified facilities data. If the modified facilities data is generated by the modification unit 25g, the plurality of units described above function again based on the modified facilities data. For example, the reach determination unit 25b, the motion determination unit 25c, the risk determination unit 25d, the physical quantity calculation unit 25e, and the display process unit 25f function again based on the modified facilities data.

Furthermore, the control process 25 may include a cycle time calculation section 25h. The cycle time calculation unit 25h is configured to calculate the cycle time of the modified facilities based on the modified facilities data. In this case, the display process unit 25f described above controls display to display a primary cycle time assumed from the facilities data acquired by the facilities data acquisition unit 25a and a secondary cycle time assumed from the modified facilities data.

### Output Device

The output device 3 includes at least a display device 31. The output device 3 may further include a printer 32 and/or a communication device 33. The display device 31 is a display device for presenting the support information to the evaluator. The display device 31 may be provided by a flat LCD display, a 3D display, a head mounted display, or the like. The display device 31 provides a GUI (graphical user interface) together with the input device 4 described later. The printer 32 and/or the communication device 33 may be used to output the results of the risk assessment. In one example, the printer 32 can be used to print materials indicating that the support apparatus 1 has been used to confirm that a safety level of the facilities has qualified a certain level. In one example, the communication device 33 can be used to transmit data indicating that the support apparatus 1 has been used to confirm that a safety level of the facilities has qualified a certain level.

### Input Device

The input device 4 includes an HMI (human machine interface) device 41. The HMI device 41 is provided by a keyboard, a mouse, a touch panel, etc. The HMI device 41 is an HMI device that is operated by the evaluator and inputs the evaluator's operations to the control device 2.

The input device 4 includes a facilities data input device 42. The facilities data input device 42 inputs data regarding the facilities arranged in the target evaluation space to the control device 2. The facilities data include the static data for stationary facilities and the dynamic data regarding the movable members of the movable facilities. For example, the positions and shapes of shelves, fences, parts stations, etc. constitute static data. The facility may include a safety control equipment including at least one intrusion sensor and safety control process. The intrusion sensor detects intrusion of the target person into a predetermined detection area. The safety control process executes control to reduce a moving speed of the movable member of the facilities in response to a detection signal of the intrusion sensor, or to stop the movable member of the facilities in response to the detection signal of the intrusion sensor. The safety control process is provided by a PLC, a sequence controller, etc. as a control device for the movable facility. In this case, a detection range of the intrusion sensor may be classified as static data. On the other hand, the planned movement track of the robot device, the moving speed of the robot device, a conveyance direction of the conveyor device, a conveyance speed of the conveyor device, etc. constitute dynamic data.

The input device 4 includes a static data input device 43. The support apparatus 1 inputs the static data to the control device 2 via the static data input device 43. The static data input device 43 may be a facility design device. Alternatively, the static data input device 43 may read the static data from a storage medium in which the static data of the static facilities is stored. In this case, the static data input device 43 is provided by a storage medium reader. Therefore, the facility design device is indirectly connected to the support apparatus 1 via the storage medium.

The input device 4 includes a dynamic data input device 44. The support apparatus 1 inputs dynamic data for planned motions of the facilities via the dynamic data input device 44. The dynamic data input device 44 may be a device that controls the motion of the facilities. For example, a PLC (programmable logic controller), a sequence controller, etc. may be used as a device for controlling the motion of the facilities. Alternatively, the dynamic data input device 44 may read the dynamic data from a storage medium in which the dynamic data is stored. In this case, the dynamic data input device 44 is provided by a storage medium reader. Therefore, the device that controls the motion of the facilities is indirectly connected to the support apparatus 1 via the storage medium. The dynamic data may include functionality of the safety control equipment, including intrusion sensors and safety control process. The functions of the safety control equipment may be expressed by a detection area for detecting intrusion of the target person, contents of safety control activated in response to detection of intrusion, and the like.

### Risk Assessment Procedure

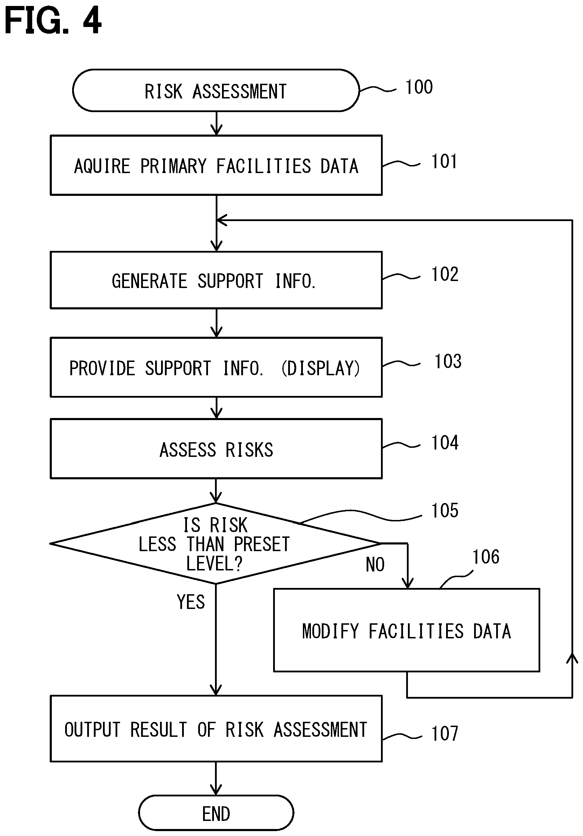

In FIG. 4, an example of a schematic procedure of risk assessment is shown. In this embodiment, steps 101-103 of the risk assessment procedure 100 are executed by the support apparatus 1. Steps 104-106 of the risk assessment procedure 100 may be performed by the evaluator or the evaluation device. Step 107 may be performed by the support apparatus 1, the evaluator, or the evaluation device.

The evaluator may independently set a risk evaluation criteria and a predetermined level at which the risk is evaluated as acceptable. Alternatively, the risk evaluation criteria and the predetermined level of acceptable risk may be based on standards set by public authorities. Alternatively, the risk evaluation criteria and the predetermined level of acceptable risk may be set by an organization responsible for setting standards and the like. In this embodiment, the risk evaluation criteria and the predetermined level of acceptable risk are based on standards established by the International Organization for Standardization (ISO). For example, (1) "ISO 10218-1:2011 Robots and robotic devices - Safety requirements for industrial robots", and/or , (2) "ISO/TS 15066:2016 Robots and robotic devices - Collaborative robots" may be referenced. The content of the standard is incorporated by reference as a description of technical elements in this specification.

In a step 101, the support apparatus 1 acquires primary facilities data. The primary facilities data is also called initial basic data. Further, the primary facilities data may be facilities data that has undergone risk assessment. The facilities data includes static facilities data and dynamic facilities data. The static facilities data may include positions of the facilities in the target evaluation space, sizes of the facilities, and the like. The dynamic facilities data indicate movement of the movable member of the facilities. The dynamic facilities data may include maximum movable areas over which the movable members of the facilities can move. The dynamic facilities data may include only the motion areas which are planned and restricted for the movable members of the facilities. The motion area is a part of the movable area. The movable area is, for example, a semicircular area centered on the multi-joint robot. The motion area is, for example, an area indicated by a collection of traces of a multi-joint robot controlled by a PLC.

The dynamic facilities data may include, for example, a direction of movement of the movable member, a speed of movement of the movable member, a mass of the movable member, and the like. For example, if the facility is a conveyor, information may include a moving direction of the conveyor, a moving speed of the conveyor, a mass of the conveyor belt, a mass of an object conveyed by the conveyor, a connection form between the conveyor belt and the object, and the like. If the facility is a multi-joint robot, a rotation direction of each of multiple rotation axes, an angular velocity of each of the multiple rotation axes, a mass of each of multiple arms, a moving direction of an end effector, a moving speed of the end effector, a mass of the end effector, a mass of an article manipulated by the end effector, etc.

In a step 102, the support apparatus 1 generates support information for supporting risk assessment procedure. The support information may include information indicating areas where risk may occur in the target evaluation space. The area where a risk may occur correspond to the risk area described above.

The area is provided as a 3D image in the target evaluation space. Further, the support information may include a physical quantity indicating a magnitude of risk in an area where risk occurrence is concerned.

In a step 103, the support apparatus 1 provides support information to the evaluator and/or the evaluation device. If the support information is provided to the evaluator, the support information is provided as a 3D image and/or a physical quantity indicating the magnitude of risk. If the support information is provided to the evaluation device, the support information is provided as data that can generate a 3D image and/or data of a physical quantity that indicates the magnitude of risk.

In a step 104, the evaluator and/or the evaluation device evaluates the risk. For example, definitions of "ISO/TS 15066" mentioned above can be used as standards for evaluating risk. "ISO/TS 15066" specifies maximum allowable pressure values (N/cm^2), maximum allowable force values (N), and maximum allowable transient energy values etc. for each of the portions of the target person, i.e., body regions. In a step 105, the evaluator and/or the evaluation device determines whether the risk presented by the support apparatus 1 is less than a predetermined risk-acceptable level. In the step 105, if the risk exceeds a predetermined level, the procedure branches NO and proceeds to a step 106. In the step 105, if the risk is below a predetermined level, the procedure branches to YES and proceeds to a step 107.

In the step 106, the evaluator and/or the evaluation device modifies the facilities data. The modified facilities data may be referred to as secondary facilities data. The modification of facilities data is carried out in a direction to improve the facilities. The evaluator and/or the evaluation device may loop through the step 106 once, or may repeat it multiple times. In these cases, the evaluator and/or the evaluation device can modify the facilities and evaluate the safety, or risk, of the modified facilities. The evaluator and/or the evaluation device improves the facilities and evaluate an effectiveness of an improvement by executing a loop through the step 106. Further, the evaluator and/or the evaluation device can obtain improved evaluation results of the facilities through the process of the step 107 described later.

Note that modifications to the facilities may be carried out to improve the safety of the facilities. In other words, the facilities data is modified to reduce risk. The facilities data is modified, for example, by adding protective equipment to protect the target person. This addition of protective equipment may be implemented, for example, by an addition of stationary facility, such as a fence, that physically prevents the target person from reaching it. This addition of protective equipment may be implemented, for example, by adding a post-event control function that detects an intrusion of the target person and controls the facilities in a safe direction.

Note that even if the safety of the facilities remains the same, modifications to the facilities may be made to improve other aspects. Other aspects may include various viewpoints such as energy consumption of the facilities, environmental impact of the facilities, noise of the facilities, scale of the facilities, and cost of the facilities. For example, facilities modification may be performed to change to less expensive facilities while maintaining a risk level of facilities below a predetermined level.

The step 106 provides the modification unit. Therefore, the control device 2 is configured to provide the modification unit that modifies the facilities data acquired in the step 101 as a data acquisition unit and generates modified facilities data. In the step 102, which is executed after the step 106, the reach determination unit, the motion determination unit, the risk determination unit, and the display process unit are configured to function based on the modified facilities data.

In the step 107, the support apparatus 1, the evaluator, and/or the evaluation device output the results of the risk assessment procedure. The support apparatus 1, the evaluator, and/or the evaluation device output the result that the facilities achieved risk below a predetermined level through a predetermined risk assessment procedure, that is, the result that the facilities achieved safety exceeding a predetermined level. The results are output to a paper medium, a computer-readable tangible storage medium storing electronic data, or data that can be transmitted to other external devices via communication. Furthermore, the support apparatus 1, the evaluator, and/or the evaluation device may authenticate the validity of the output. The support apparatus 1, the evaluator, and/or the evaluation device certify, for example, that the risk assessment procedure complies with standards established by an organization such as ISO. Note that the support apparatus 1 may provide the following additional functions in the risk assessment procedure 100. (1) The basic data in the step 101 can be acquired from an external file generated by external software other than the support apparatus 1. (2) The external software such as Visual Components, Oktopuz, and WINCAPS may be used. The support apparatus 1 can directly call data generated by the external software. (3) The support apparatus 1 may simulate movements of the movable members of the facilities on the display device 31 of the support apparatus 1 using the acquired basic data. The motion simulation is provided as a 3D image. (4) The support apparatus 1 can change the arrangement of the acquired facilities. A change operation can be performed using the GUI of the support apparatus 1. (5) The support apparatus 1 can output layout data that optimizes an arrangement of facilities. The support apparatus 1 can output layout data that optimizes safety measures of the facilities. Here, the safety measures include the safety control equipment including an intrusion sensor and safety control process. The layout data can be output as 3D data that can be used in general CAD devices. (6) The support apparatus 1 can perform measurement process or display process for distance between two points or route distance by pointing an arbitrary plurality of points using the GUI in the 3D image displayed on the display device 31. (7) The support apparatus 1, the evaluator, and/or the evaluation device may output information at an intermediate stage where a series of risk assessment procedure have not yet been completed at any stage of the procedure 100. For example, in the step 102, an unfinished image may be displayed in the middle of calculating the area where risk may occur.

### Process of Support Apparatus

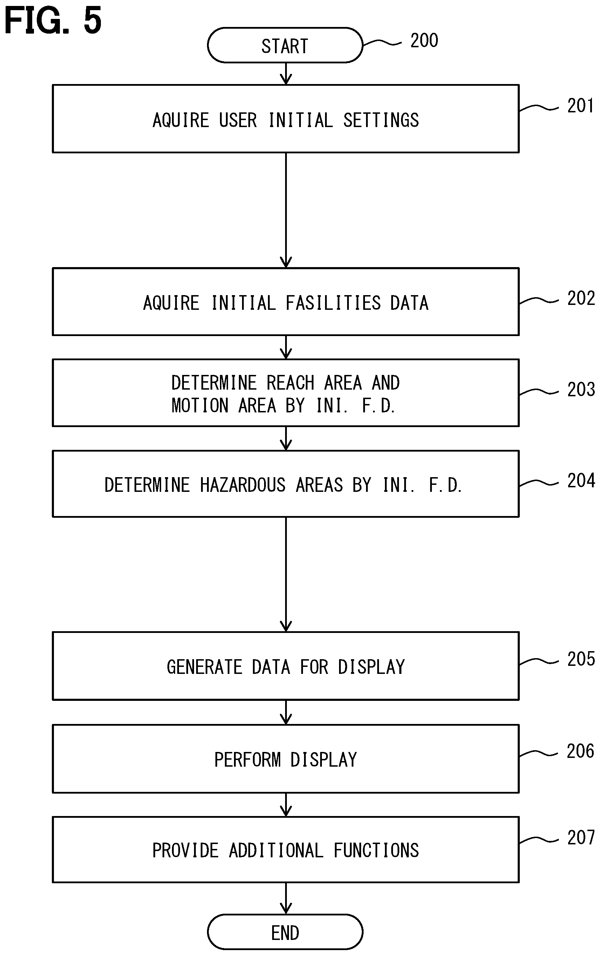

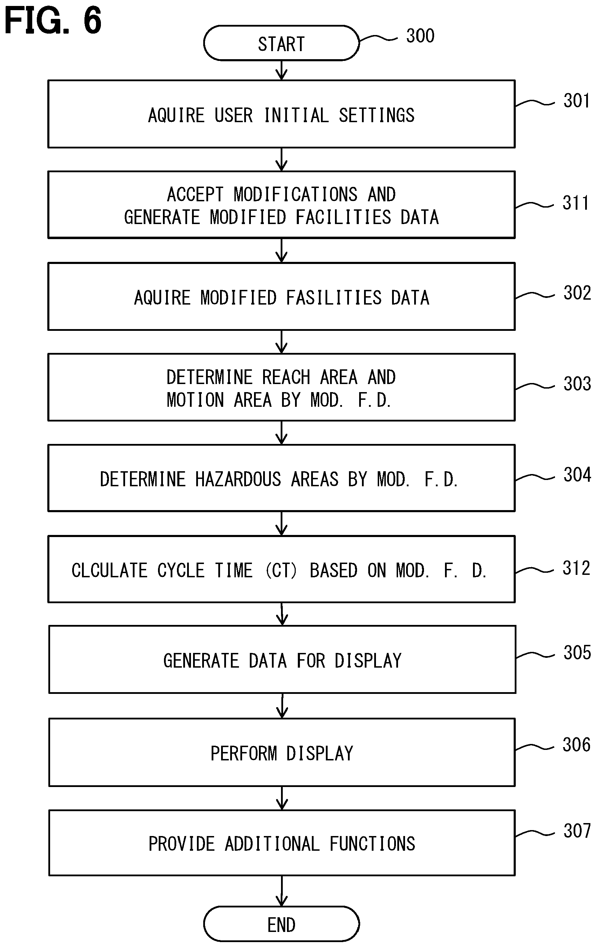

In the following description, the support process 200 that is first performed on initial facilities data is described with reference to FIG. 5. Further, after the support process 200, the support process 300 is explained with reference to FIG. 6, which is executed again based on the modified facilities data after modifying the facilities and generating the modified facilities data. The support process 200 is called a support process based on a primary facilities data. The support process 300 is called a support process based on a secondary facilities data.

Note that before the support process 200, equipment may be modified without executing the support process 200. In this case, only the support process 300 is executed without executing the support process 200.

FIG. 5 is a flowchart showing support process 200 based on a primary facilities data. The primary facilities data is, for example, data set in the facilities design device. The primary facilities data is data indicating initial facilities to be subjected to risk assessment using the support apparatus 1. This primary facilities data includes the static data of the equipment. The primary facilities data may include facilities dynamic data.

In a step 201, the support apparatus 1 obtains initial settings made by the user from the input device 4. The initial settings are also called user preferences. The initial settings include at least (1) colors for each of a plurality of types of support information, and/or (2) display/non-display for each of a plurality of types of support information. In the step 201, the user can set the colors of the static image, the motion area image, the reach area image, the transient contact risk area image, and the quasi-static contact risk area image according to his/her preference. The transient contact risk area image and the quasi-static contact risk area image may be set to the same color as the risk area image. For example, the user can assign different colors to different images. In the step 201, the user can set display or non-display of the static image, the motion area image, the reach area image, the transient contact risk area image, and a quasi-static contact risk area image. The transient contact risk area image and the quasi-static contact risk area image can be set to be displayed or non-display together as the risk area image. For example, among the risk area image, the user can display either the transient contact risk area image or the quasi-static contact risk area image, and non-display the other.

The step 201 provides a display switch unit. The control device 2 is configured to provide a display switching unit that switches between displaying and non-displaying the facilities, the reach area, the motion area, and the risk area. The step 201 provides a color setting unit. The color setting unit sets the colors of the plurality of images displayed on the display device in response to a setting operation by an evaluator. The color setting section makes it possible to set the display colors of the facilities, the reach area, the motion area, and the risk area according to the settings of the evaluator.

In a step 202, the support device 1 acquires initial facilities data from the input device 4. The facilities data includes static data and dynamic data. The step 202 provides the equipment data acquisition unit 25a.

In a step 203, the support device 1 predicts the reach area of the target person, determines the reach area, and generates data indicating the reach area. The reach area is an area that the target person can reach in the target evaluation space. The reach area is determined based on the facilities data. The step 203 provides the reach determination unit 25b. Areas where the target person cannot reach are excluded from the reach area due to the positions and shapes of the facilities. On the other hand, an opening of the facilities, for example an opening in a fence, allows the target person to reach beyond the fence through the opening. Therefore, the reach area is generated to extend through the opening. The facility may include the safety control equipment including an intrusion sensor and safety control process. In this case, a detection area of the intrusion sensor is excluded from the reach area.

In the step 203, the support apparatus 1 determines the motion area. The motion area is determined from facilities data, especially dynamic data. The motion area may be determined after determining the reach area. Alternatively, the reach area may be determined after determining the motion area. An order of methods in this disclosure includes various orders as illustrated herein. The reach area may be determined after determining the motion area. Alternatively, the motion area may be determined after determining the reach area. The step 203 provides the motion determination unit 25c.

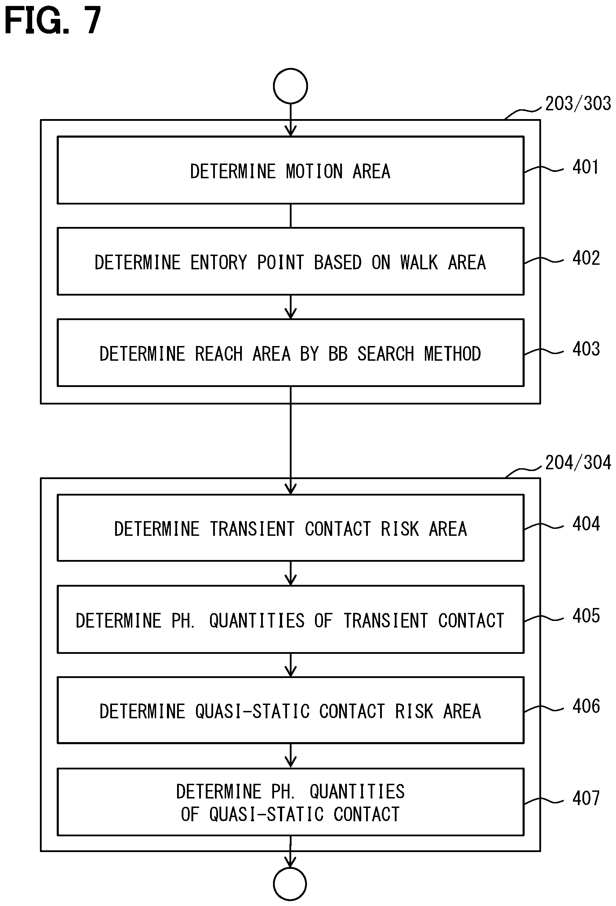

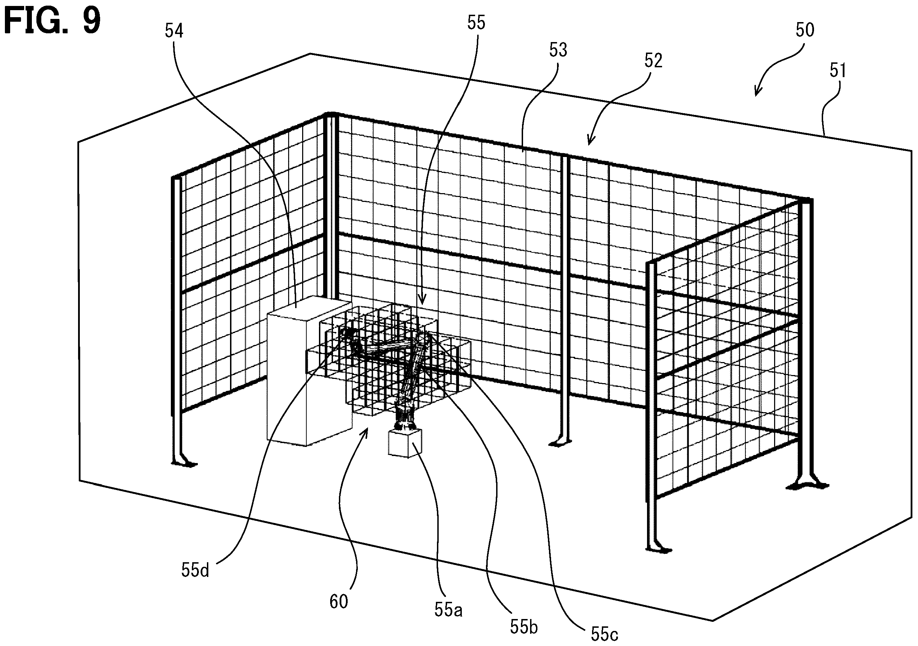

FIG. 7 shows details of the process in the step 203. In this embodiment, in a step 401, the support apparatus 1 determines the motion area. The motion area is the area of operation programmed into the facilities. Alternatively, the motion area may be extended to a range of motion within which the facility can operate. An example of the motion area 60 is illustrated in FIG. 9.

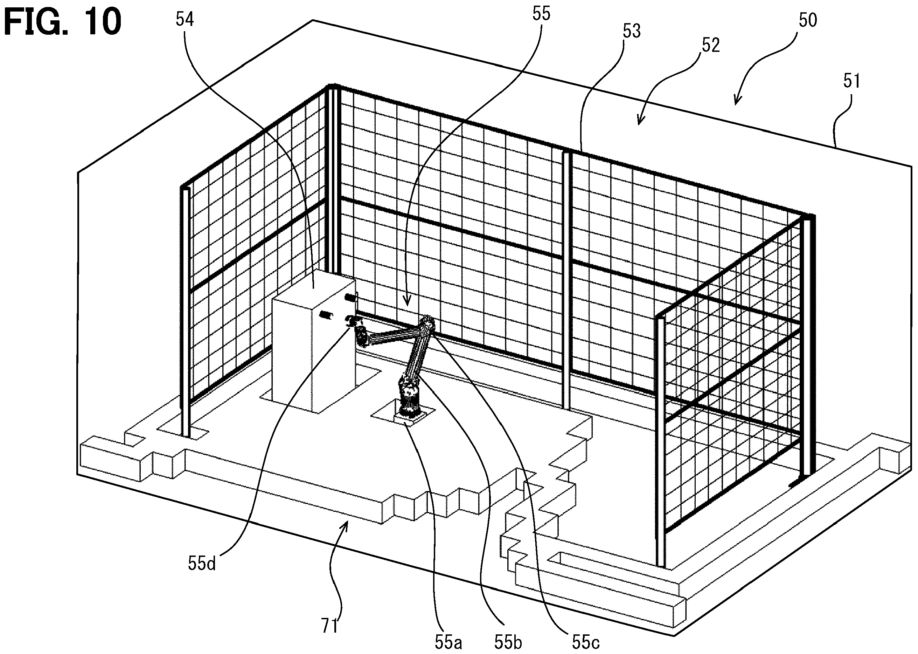

In a step 402, the support apparatus 1 sets at least one entry point in the walking area of the target person. The entry point is a starting point from which the target person begins moving toward the movable facility. For example, multiple entry points are determined on the walking area of the target person. An example of the walking area 71 is shown in FIG. 10.

In a step 403, the support apparatus 1 uses a branch-and-bound method to search for a plurality of potential routes that the target person can take from each of the entry points to the motion area. At this time, at least one or all of the following conditions may be considered: a responsiveness of the facility, a time for decelerating the facility to a safe speed, a safe distance between the target person and the facility, and a presence of a protective device. At this time, the facility that obstructs the movement of the target person is taken into consideration during the search procedure. For example, a presence of stationary facility limits potential routes because the target person cannot pass through the stationary facility. For example, if a safe distance is ensured between the facilities and the target person, there is no need to consider the potential route.

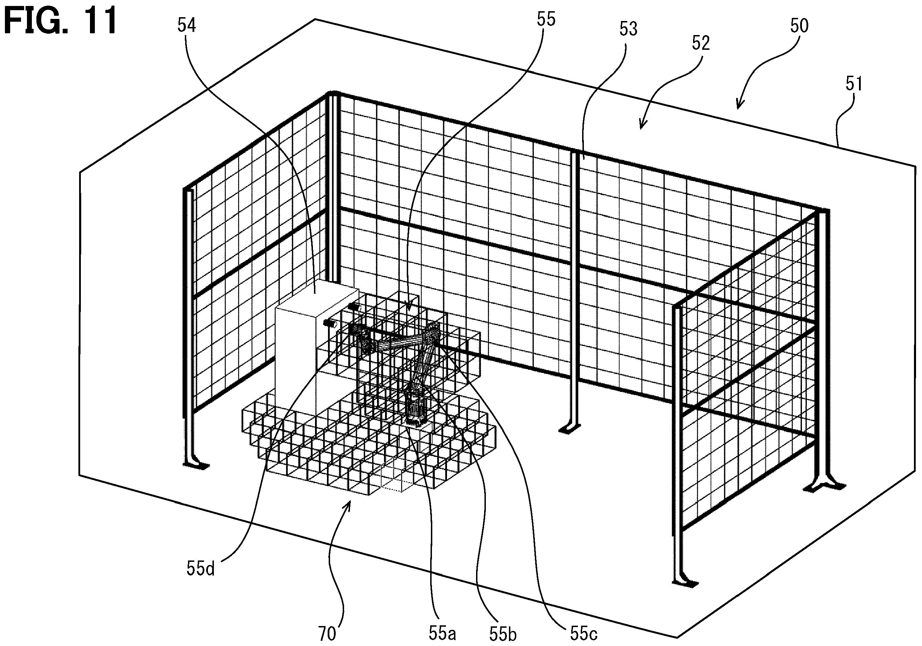

For example, protective devices, which includes physical barriers such as fences, stationary facilities that impede the movement of the target person, may be considered in the procedure. Physical barriers act to limit the potential routes. For example, protective devices, which includes virtual barriers, for example a safety zone set by a laser scanner, may be considered in the procedure. Virtual barriers act to limit the potential routes. The protective devices constrain behavior of the target person. In a step 403, the support apparatus 1 searches for potential routes through which the target person can reach the movable portion while respecting constraints imposed by the protection devices. As a result, the reach area is determined speculatively by a branch-and-bound search algorithm. An example of the reach area 70 determined by the branch-and-bound search algorithm is shown in FIG. 11.

Return to FIG. 5, in a step 204, the support apparatus 1 determines the risk area. The risk area is determined based on the reach area and the motion area. An interference position where interference between the portion of the target person and the movable member may be concerned are determined based on the reach area where the target person may enter and the motion area of the movable member assumed from the dynamic data of the facilities. A collection of multiple interference positions is a risk area. The step 204 provides the risk determination unit 25d.

The interference between the movable member and the portion of the target person may include either one of the transient contact and the quasi-static contact. In the step 204, the support apparatus 1 determines a transient contact risk area and a quasi-static contact risk area. The transient contact risk area is determined as a collection of multiple positions where transient contact are concerned. The quasi-static contact risk area is determined as a collection of multiple positions where quasi-static contact are concerned.

The transient contact and the quasi-static contact occur in the risk area where interference between the facilities and the portion of the target person is expected. The transient contact risk area and the quasi-static contact risk area are included in the risk area. The transient contact and the quasi-static contact are distinguished based on the movement direction of the facilities included in the dynamic data, especially the movement direction when interference occurs. The transient contact and the quasi-static contact are identified based on the positions of the stationary facilities and the movable facilities included in the facilities data, in particular the position of the facilities in the movement direction. For example, if the facility and the portion of the target person collide and the portion of the target person is expected to behave in a manner equivalent to "hitting", the transient contact is determined. For example, if the facility and the portion of the target person collide and the portion of the target person is expected to behave in a manner equivalent to a "sandwiching", the quasi-static contact is determined. Here, a threshold value for "behavior equivalent to "hitting"" and a threshold value for "behavior equivalent to "sandwiching"" are defined based on the above-mentioned ISO. For example, if the facility exists within a predetermined distance in the movement direction, the support apparatus 1 determines that a behavior equivalent to the quasi-static contact, that is, "sandwiching" may occur.

Here, a threshold value for "a behavior equivalent to a hitting" can be set in accordance with the above-mentioned ISO standards. Additionally, or alternatively, the threshold value for "a behavior equivalent to a hitting" can be set based on a kinematic model obtained by trial contact on a test bed. The trial contact in the test bed can be simulated in a trial operation in a temporary facility. For example, the test bed is the temporary facility. The threshold value for "a behavior equivalent to a sandwiching" can be set based on a kinematic model obtained through a trial contact on a test bed. Additionally, or alternatively, the threshold value for "a behavior equivalent to a sandwiching" can also be set in accordance with ISO or other standards.

Furthermore, in the step 204, the support apparatus 1 calculates physical quantities indicating degree of interference between the facilities and the target person. The physical quantities of interference are calculated for each interference determined in the step 204. For theoretical calculation formulas of the physical quantities, for example, the definition of the above-mentioned "ISO/TS 15066" may be used. For example, the transition energy from the facilities to the portion of the target person is defined by the following formula E=F^2/2k=1/2·µ·vr^2. In the above formula, E is the transition energy (J), F is the collision force (N), µ is the reduced mass (kg) in the two-body system, and vr is the relative velocity between the facilities and the portion of the target person. Furthermore, in calculating the physical quantities, an area of a contact surface between the facility and the portion of the target person where interference is concerned, the mass of the facility, the mass of the portion, the relative velocity between the facility and the portion, etc. are taken into consideration. The physical quantities are calculated for each portion of the target person, i.e., a part of a body of the target person. The step 204 provides the physical quantity calculation unit 25e.

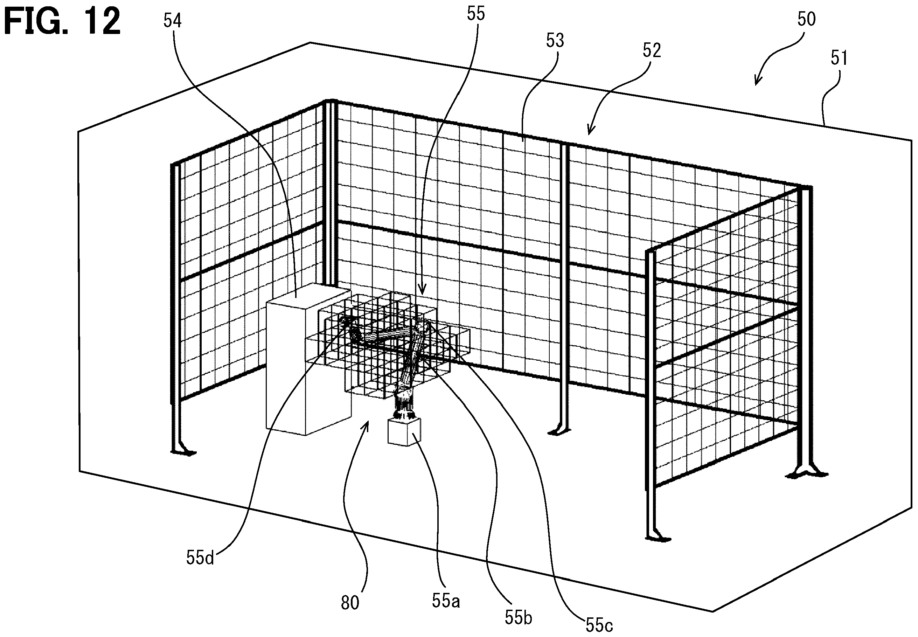

FIG. 7 shows details of the process in the step 204. In a step 404, the support apparatus 1 determines the transient contact risk area. The transient contact risk area is given as an overlapping area of the motion area and the reach area. An example of the transient contact risk area 80 is shown in FIG. 12.

In a step 405, the support apparatus 1 determines physical quantities of the transient contact. Some of the physical quantities of the transient contact are calculated based on the above-mentioned ISO/TS 15066. Furthermore, some of the physical quantities of the transient contact are calculated based on the kinematic model obtained from the test bed.

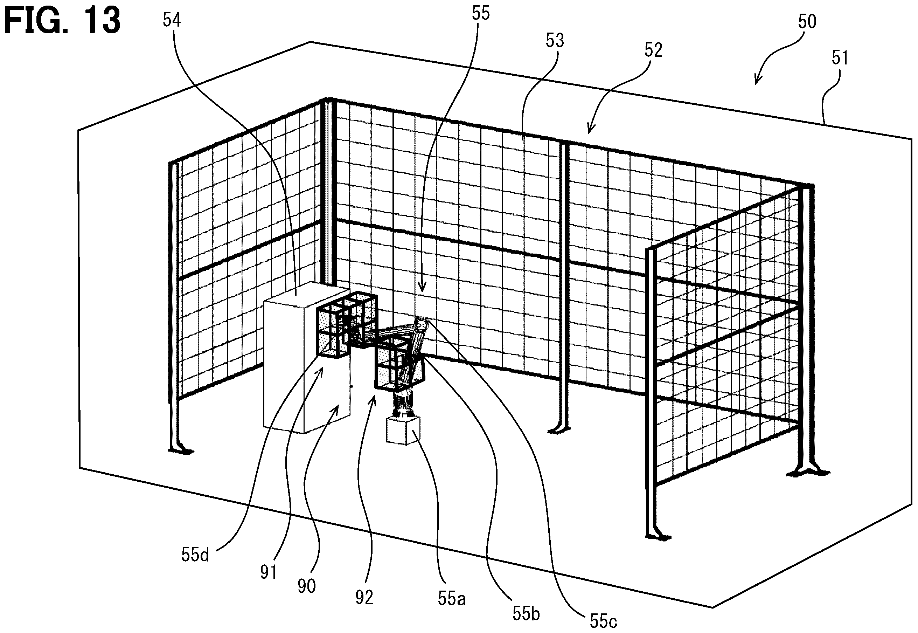

In a step 406, the support apparatus 1 determines the quasi-static contact risk area. The quasi-static contact risk area is provided as a part of the transient contact risk area. The quasi-static contact risk area is set if the following two conditions are satisfied. (1) It is an area that exists within a predetermined threshold distance from stationary facilities or movable facilities among the transient contact risk area. (2) A moving direction of the movable facility is oriented toward the stationary facility or the movable facility in the condition (1). An example of the quasi-static contact risk area 90 is shown in FIG. 13.

In a step 407, the support apparatus 1 determines physical quantities of the quasi-static contact. Furthermore, some of the physical quantities of the quasi-static contact are calculated based on the kinematic model obtained from the test bed. Furthermore, some of the physical quantities of quasi-static contact may be calculated based on standards such as the above-mentioned ISO.

Return to FIG. 5, in a step 205, the support apparatus 1 generates a set of display data. The support apparatus 1 reflects the initial setting information acquired in the step 201 on the display data. The display data may include data for multiple layers. In this case, one display image is configured by displaying a plurality of layers in an overlapping manner. Overlapping display may also be referred to as a transparent display, and enables to recognize all images including a surface image and images below the surface image. The display data includes, for example, a layer that displays the static image, a layer that displays the motion area image, a layer that displays the reach area image, a layer that displays the transient contact risk area image, and a layer that displays the quasi-static contact risk area image. The display data makes it possible to display the transient contact risk area image and the quasi-static risk area image in a manner distinguishable by human vision. The display data includes data for displaying the physical quantities of interference. The step 205 provides a display process unit 25f.

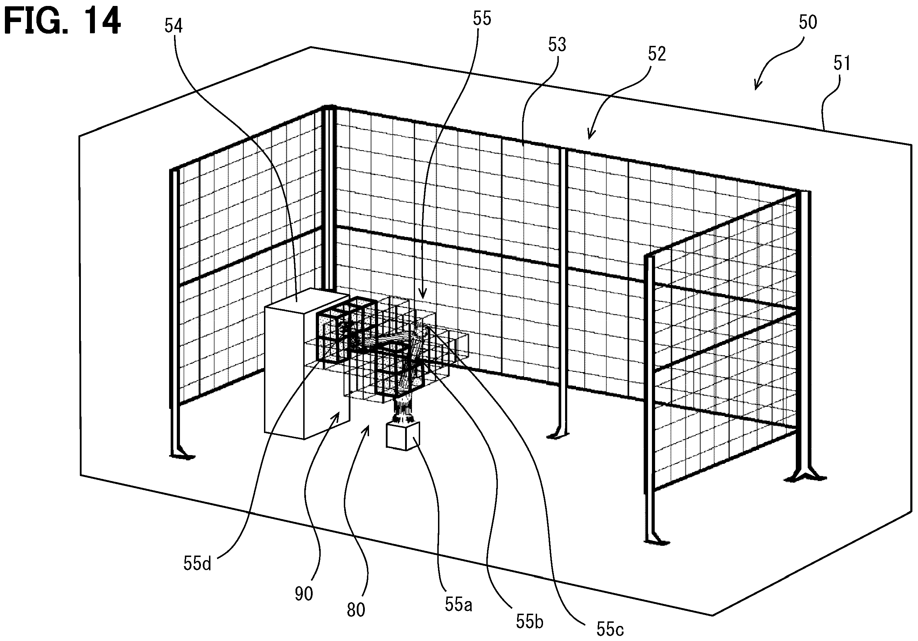

In a step 206, the support apparatus 1 displays at least two of the static image, the motion region image, the reach region image, the transient contact risk area image, and the quasi-static risk area image in an overlapping manner on the display device 31. The support apparatus 1 displays the basic image and the risk area image in an overlapping manner on the display device 31. The basic image includes at least one of a static image, a motion area image, and a reach area image. In the step 206, the support apparatus 1 is configured to display the transient contact risk area and the quasi-static contact risk area in an overlapping manner and in a distinguishable manner. An example of an image in which the transient contact risk area 80 and the quasi-static contact risk area 90 are displayed simultaneously is shown in FIG. 14.

The risk area image includes at least one of the transient contact risk area image and the quasi-static contact risk area image. The support apparatus 1 displays the transient contact risk area image and the quasi-static contact risk area image on the display device 31 in a visually distinguishable manner. One example of the visually distinguishable manner is provided by setting different colors for the transient contact risk area image and the quasi-static contact risk area image. Another example of the visually distinguishable manner is provided by setting different textures or a presence or absence of a texture. Yet another example of the visually distinguishable manner is provided by setting different blinking cycles or by a presence or absence of blinking. The visually distinguishable manner can be provided by various displays other than the manner illustrated here. The user may set the same color for the transient contact risk area image and the quasi-static contact risk area image. In this case, the support apparatus 1 may display the transient contact risk area image and the quasi-static contact risk area image in a distinguishable manner by adding an additional display mode such as a texture or blinking.

FIG. 9 is an example of an image displayed on the display device 31. The images are also called 3D images. In the drawing, the basic image 50 and the motion area image 60 are included. The basic image 50 includes the target evaluation space 51. The target evaluation space 51 is also called a 3D virtual space. The basic image 50 includes a static image 52. In the illustrated example, the static image 52 includes the facilities including a fence 53, a processing machine 54, and a movable facility 55.

The fence 53 is one example of the protection device that protects the target person by restricting entering of the target person. In the illustrated example, the fences 53 are arranged on three sides of the target evaluation space 51. In other words, the fence 53 has an opening on the side in front of the target evaluation space 51 through which the target person can enter. Note that, in this embodiment, intrusion from the top of the target evaluation space 51 and gaps in the fence 53 are not taken into consideration. Alternatively, in the step 203, the reach area may be predicted by taking into consideration intrusion from the top of the target evaluation space 51 and the gaps on the fence 53.

In the illustrated example, a robot device is illustrated as one of the movable facility 55. A multi-joint robot is illustrated as an example of the robot device. The multi-joint robot includes a base 55a. The base 55a is a static facility fixed in the target evaluation space 51. The multi-joint robot includes movable members such as a plurality of arms 55b and a plurality of joint mechanisms 55c. The joint mechanism 55c may include a power mechanism such as a motor. The joint mechanism 55c provided between the base 55a and the arm 55b may classified in the stationary facility. On the other hand, the joint mechanism 55c arranged between one arm 55b and the other arm 55b is included in the movable member. Furthermore, the multi-joint robot includes an end effector 55d at a distal end. In this example, the plurality of arms 55b, the plurality of joint mechanisms 55c, and the end effector 55d correspond to the movable members of the facilities.

In FIG. 9, the motion area image 60 is illustrated as a collection of a plurality of voxels. The motion area is an area in which the movable facility 55 is scheduled to move. In the illustrated example, the movable facility 55 is programmed to perform a predetermined task in the vicinity of the processing machine 54. As a result, a plurality of voxels indicating the motion area are set between the processing machine 54 and the movable facility 55, and set around the movable facility 55. More specifically, the plurality of voxels indicating the motion area are set to include the tracks along which the plurality of arms 55b, the plurality of joint mechanisms 55c, and the end effector 55d pass through.

FIG. 10 is an example of an image displayed on the display device 31. The drawing includes the basic image 50 and the walking area 71 of the target person. The walking area 71 extends around the fence 53. Further, the walking area 71 extends from an opening on the front side in the drawing toward an inside surrounded by the fence 53. In particular, the walking area 71 extends diagonally from the opening on the front side in the drawing toward the movable facility 55 as if attempting direct access. The walking area 71 extends to surround the movable facility 55. Furthermore, the walking area 71 extends to surround the processing machine 54. Note that the walking area 71 is one of the basic data for determining the reach area 70. Therefore, the walking area 71 may not be displayed in the image.

FIG. 11 is an example of an image displayed on the display device 31. In the drawing, the basic image 50 and the reach area image 70 are included. The reach area image 70 is illustrated as a collection of a plurality of voxels. The voxel indicating the reach area indicates an area into which the target person may enter. The voxels indicating the reach area are set to spread from the front side of the target evaluation space 51, that is, from the opening of the fence 53. The voxels indicating the reach area are set around the processing machine 54. The voxels indicating the reach area are set around the movable facility 55.

The motion area image 60 and the reach area image 70 may be displayed on the basic image 50 in an overlapping manner. In this case, the motion area image 60 and the reach area image 70 are displayed in a manner that can be distinguished by human vision.

FIG. 12 is an example of an image displayed on the display device 31. In the drawing, the basic image 50 and the transient contact risk area image 80 are included. The transient contact risk area image 80 is illustrated as a collection of a plurality of voxels. The voxel indicating the transient contact risk area indicates an area where there is a concern that the transient contact may occur. The voxel indicating the transient contact risk area is located in an area where the motion area and the reach area overlap, and where the movable facility 55 may come into transient contact with the target person. The voxels indicating the transient contact risk area are set around the movable facility 55.

The transient contact risk area image 80, the motion area image 60, and the reach area image 70 may be displayed in an overlapping manner on the basic image 50. In this case, the transient contact risk area image 80 is displayed in a manner that is visually distinguishable from the motion area image 60 and the reach area image 70. As a result, the evaluator who looks at the display device 31 can intuitively recognize that there is a risk of transient contact and the position of the transient contact.

FIG. 13 is an example of an image displayed on the display device 31. In the drawing, the basic image 50 and the quasi-static contact risk area image 90 are included. The quasi-static contact risk area image 90 is illustrated as a collection of a plurality of voxels. A voxel indicating a quasi-static contact risk area indicates an area where there is a concern that the quasi-static contact may occur. The voxel indicating the quasi-static contact risk area is located in an area where the motion area and the reach area overlap, and where the movable facility 55 may come into quasi-static contact with the target person. The voxels representing the quasi-static contact risk areas may include spatially separated groups 91 and 92. The illustrated example includes a first group 91 defined between the end effector 55d and the processing machine 54. The illustrated example includes a second group 92 defined between the plurality of arms 55b of the multi-joint robot.

The quasi-static contact risk area image 90, the motion area image 60, and the reach area image 70 may be displayed in an overlapping manner on the basic image 50. In this case, the quasi-static contact risk area image 90 is displayed in a manner that is visually distinguishable from the motion area image 60 and the reach area image 70. As a result, the evaluator who looks at the display device 31 can intuitively recognize that there is a risk of the transient contact and a position of the transient contact.

Further, the transient contact risk area image 80 and the quasi-static contact risk area image 90 may be displayed in an overlapping manner on the basic image 50. In this case, the transient contact risk area image 80 and the quasi-static contact risk area image 90 are displayed in a distinguishable manner from each other by human vision. As a result, the evaluator who looks at the display device 31 can intuitively recognize that there is risks of the transient contact and the quasi-static contact and positions of the transient contact and the quasi-static contact.

FIG. 14 is an example of an image displayed on the display device 31. The drawing includes the basic image 50, the transient contact risk area image 80, and the quasi-static contact risk area image 90. The transient contact risk area image 80 and the quasi-static contact risk area image 90 are displayed in an overlapping manner. The transient contact risk area image 80 and the quasi-static contact risk area image 90 are displayed so that the evaluator can distinguish them. The transient contact risk area image 80 and the quasi-static contact risk area image 90 are displayed so that the evaluator can recognize their existence. The transient contact risk area image 80 and the quasi-static contact risk area image 90 are displayed in different colors. In the drawing, the transient contact risk area image 80 is represented by colorless voxels. In the drawing, the quasi-static contact risk area image 90 is represented by voxels with dots.

Returning to FIG. 5, further in the step 206, the support apparatus 1 may be requested by the evaluator to display the physical quantity of interference through the GUI of the support apparatus 1. In this case, the support apparatus 1 displays the physical quantity of interference.

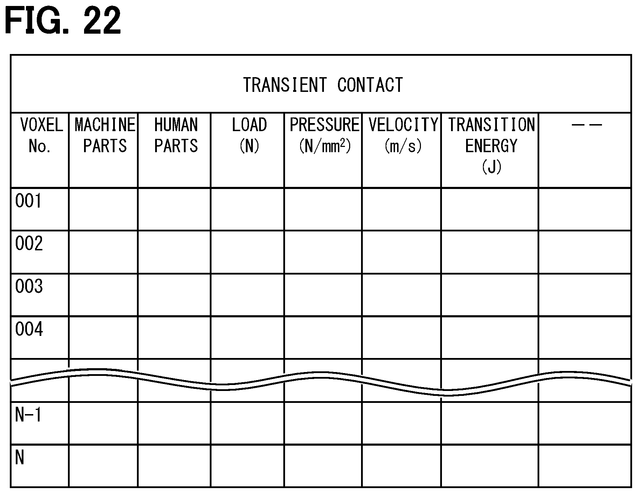

FIG. 22 is an example of physical quantities of interference displayed in a table format. For example, a plurality of values of collision force at a plurality of voxels displayed in the transient contact risk area image are displayed. In the illustrated example, for one voxel, a part of the facility causing the interference, a part of the body of the target person causing the interference, the maximum collision force (N), the pressure applied to the target person (N/mm^2), the relative velocity at the time of collision (m/sec), and the transition energy (J) from the movable facility to the target person are displayed. The part of the facility causing the interference are, for example, parts of an articulated robot. The parts of the body of the target person causing the interference include hands, arms, head, and eyes.

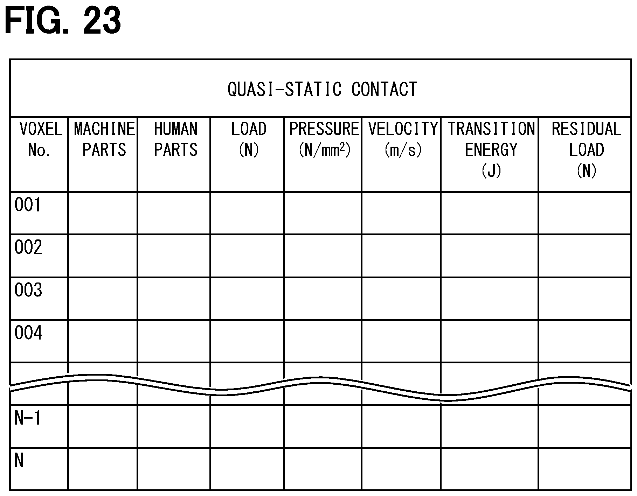

FIG. 23 is an example of physical quantities of interference displayed in a table format. For example, a plurality of values of collision force at a plurality of voxels displayed in the quasi-static contact risk area image are displayed. In the illustrated example, for one voxel, a part of the facility causing the interference, a part of the body of the target person causing the interference, the maximum collision force (N), the pressure applied to the target person (N/mm^2), the relative velocity at the time of collision (m/sec), the transition energy (J) from the movable facility to the target person, and the steady collision force WTst, i.e., the residual load (N) are displayed.

Returning to FIG. 5, in parallel with the step 206, the risk assessment procedure is performed by the evaluator or the evaluation device. If the risk assessment procedure is completed, the process of the support apparatus 1 proceeds to a step 207. Note that the word "final" does not mean only when the risk assessment procedure is completed. The term "final" includes a case where the process proceeds to the step 207 in a middle of the risk assessment procedure. For example, this may apply the case where the evaluator wishes to output an interim result in a middle of the risk assessment procedure.

In the step 207, the support apparatus 1 provides the additional function described above. Furthermore, in the step 207, the support apparatus 1 outputs a final information for the risk assessment procedure. The final information is output as a printed matter from the printer 32 or as data from the communication device 33. The final information may include information that the facilities has been determined to qualify because it meets a predetermined standard, or that it has been determined to fail because the facilities do not meet the predetermined standard. The final information may include facilities data that was subject to the risk assessment procedure. For example, layout data of the facilities that was subject to the risk assessment procedure may be output as the final information. Furthermore, the final information may include certification that the risk assessment procedure and the like comply with the standards of a predetermined organization.

FIG. 6 is a flowchart showing support process 300 based on a secondary facilities data. A step 301 is the same process as the step 201. Steps 302, 303, 304, 305, 306, and 307 correspond to the steps 202, 203, 204, 205, 206, and 207, respectively. The steps 302, 303, 304, 305, 306, and 307 are different from the steps 202, 203, 204, 205, 206, and 207 in aspects that each process is performed on the secondary facilities data indicating the modified facilities. In the following description, differences between the flowchart of FIG. 5 and the flowchart of FIG. 6 are mainly explained. Regarding the correspondence between the flowchart of FIG. 5 and the flowchart of FIG. 6, the preceding description can be referred to.

In a step 301, the support apparatus 1 provides the same process as in the step 201. In the step 301, the initial settings acquired in the step 201 can be used again.

In a step 311, the support apparatus 1 accepts modifications to the facilities indicated by the primary facilities data. Furthermore, in the step 311, the support apparatus 1 generates modified facilities data. The modified facilities data is also referred to as secondary facilities data. In the step 311, the support apparatus 1 provides a GUI that receives modifications of the facilities and generates modified facilities data indicating the modified facilities. At this time, the support apparatus 1 provides function similar to the facility design device regarding modification of the facility.

The secondary facilities data is facilities data that has been modified in order to improve the facilities after performing a risk assessment procedure of the facilities using the support information presented by the support apparatus 1. The improvement of the facilities can be implemented from various perspectives. The improvement of the facilities may be implemented, for example, to improve facilities safety. The improvement of the facilities may be implemented, for example, to reduce facilities costs. The improvement of the facilities may be implemented, for example, to simplify the facilities.

The modifications to the facilities may be implemented by changing dynamic data of the movable members of the facilities. Changing the static data of the facilities include changing a position of the facility, changing shape of the facility, and the like. Changing the static data of the facilities include removing at least one of the facilities. Changing the static data of the facilities include adding at least one of the facilities.

An example of facility in which the static data is changed is a fence to prevent intrusion of the target person. A fence is a type of stationary facility that physically prevents the target person from entering. A fence is one type of protective facility for protecting the target person from interference. The modifications to facilities can be performed, for example, by enlarging a fence, reducing a fence, adding a fence, or removing a fence. In these cases, the secondary facilities data includes modified fence data.

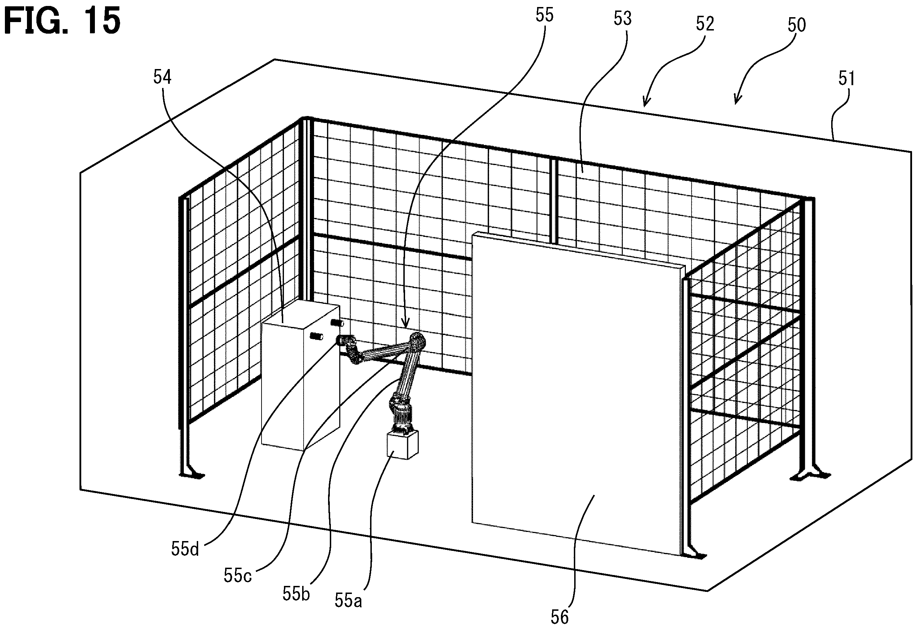

FIG. 15 is an example of an image displayed on the display device 31. The drawing includes the basic image 50 and an added fence 56. The added fence 56 is one of the protection devices. The added fence 56 is one of the physical barriers. The added fence 56 narrows the opening of the fence 53 on the near side in the drawing. The added fence 56 affects the reach area of the target person. In the illustrated example, the added fence 56 acts to limit the reach area of the target person. The display device 31 displays the fence 56 added in the step 311. This display increases a predictability of the effectiveness of the added protection device.

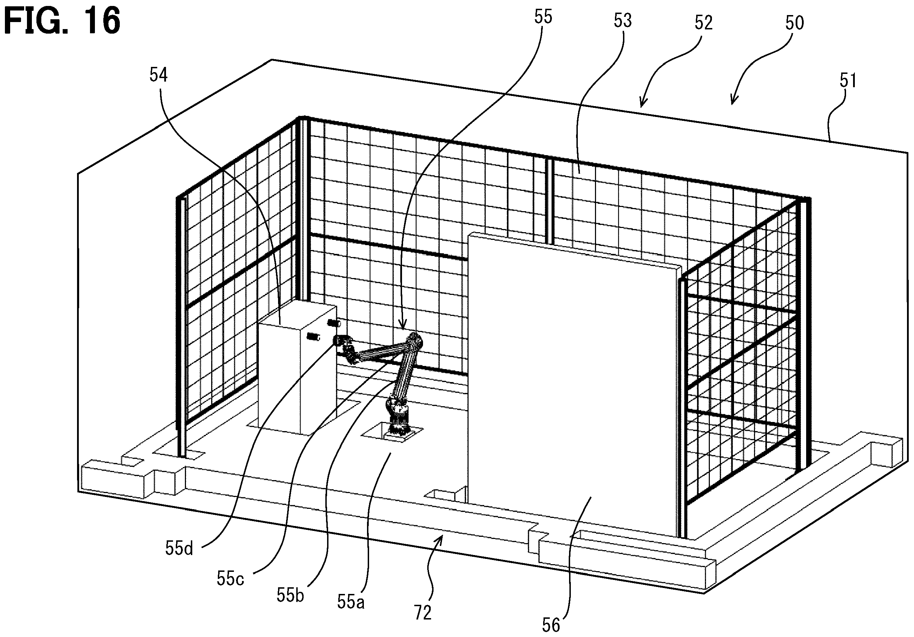

FIG. 16 is an example of an image displayed on the display device 31. The drawing includes the basic image 50, the added fence 56, and a modified walking area 72. The added fence 56 changes a walking area of the target person. In the illustrated example, the target person is restricted to walk toward the movable facility 55 from the opening of the fence 53. As a result, the target person takes way around the added fence 56 to approach the movable facility 55. The support apparatus 1 generates a walking area 72 taking the added fence 56 into consideration. The support apparatus 1 determines the reach area 70 based on the corrected walking area 72, which is a corrected walking area. The evaluator can intuitively understand the effect of the added fence 56 by looking at the image.

Here, a case has been described in which a physical barrier such as the fence 56 is additionally provided to the secondary facilities data. It should be noted that the physical barriers, such as the fences 56, may also be included in the primary facilities data. Therefore, the explanation here also applies to the primary facilities data.

Other examples of facility in which the static data is changed is the safety control equipment including an intrusion sensor and safety control process. The safety control equipment is one type of protection device for protecting the target person from interference. The modifications to facilities may be performed by, for example, changing the safety control equipment, removing the safety control equipment, or adding the safety control equipment. More specifically, this is implemented by changing the detection range of the safety control equipment, changing a responsiveness of the safety control equipment, etc. In these cases, the secondary facilities data includes modified data of the safety control equipment.

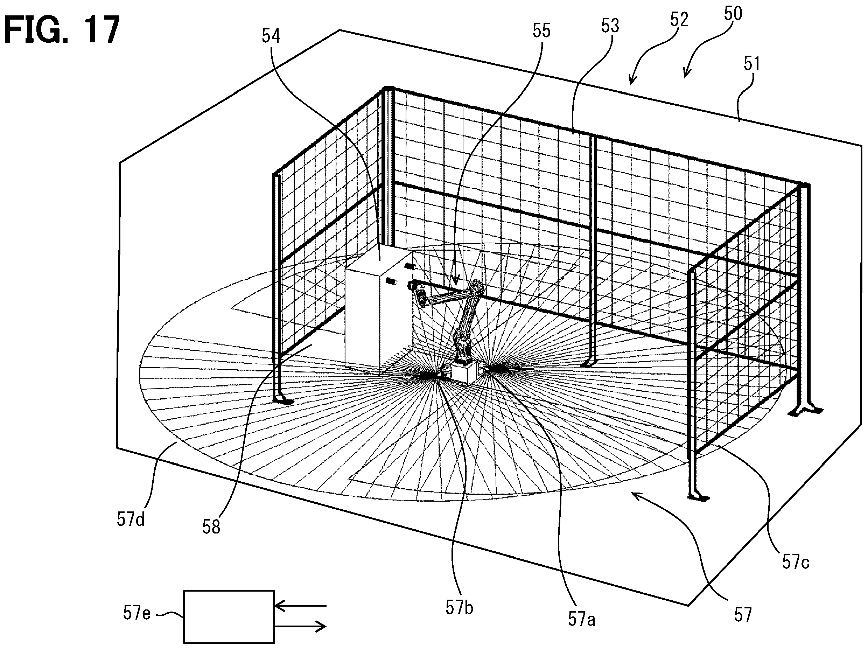

FIG. 17 is an example of an image displayed on the display device 31. The drawing includes the basic image 50 and an added safety control device 57. The added safety control device 57 is one of the protection devices. The added safety control device 57 is one of the virtual barriers. The added safety control device 57 includes two intrusion sensors 57a and 57b installed at the base of the movable facility 55. The intrusion sensors 57a and 57b are provided by lasertype optical sensors. Each of the two intrusion sensors 57a and 57b provides a detection range 57c and 57d, respectively. The detection ranges 57c and 57d are virtually shown by radial lines illustrating light rays and circular lines indicating effective detection ranges. The safety control device 57 includes a control device 57e that executes safety control processing. The control device 57e receives detection signals from the intrusion sensors 57a and 57b, and controls operations of the movable facility 55 toward a safe direction, which improves safety of the target person. Control towards the safety is provided, for example, by reducing an operating speed of the movable facility 55 or by stopping the movable facility 55. For example, assume that the target person enters the detection ranges 57c and 57d of the intrusion sensors 57a and 57b. In this case, at least one of the intrusion sensors 57a and 57b generates a detection signal. The control device 57e acquires the detection signal. Further, the control device 57e controls the operation of the movable facility 55 in a safe direction in response to the detection signal. The added safety control device 57 affects the reach area of the target person. If the target person enters the detection ranges 57c and 57d, the control device 57e prevents interference between the target person and the movable facility 55, so the safety control device 57 acts to reduce the reach area of the target person.

The safety control device 57 provides a protection area for causing the movable facility 55 to perform a safe operation upon entry of the target person. The safe operation is provided by slowing down, stopping, etc. of the multi-joint robot. The safety control device 57 providing the protection area and the safe operation is effective if the movable facility 55 provides adequate response time. If the movable facility 55 cannot provide adequate response time, the target person may be at risk. The support apparatus 1 has a coefficient regarding the response time of the movable facility 55. This coefficient is set on the support apparatus 1. This coefficient is adjustable on the support apparatus 1. The coefficient includes at least one of the sensor response time of the intrusion sensor, the stop time of the movable facility 55, and the like. The support apparatus 1 reflects coefficients related to the response time in a mathematical model constructed based on the facilities data. The support apparatus 1 automatically calculates a safety distance based on the ISO13855 regulations, for example. The safety distance is a distance between the movable facility and the target person, and is the minimum distance that ensures safety. The safety distance is used, for example, in the branch and bound methods to determine the reach area.

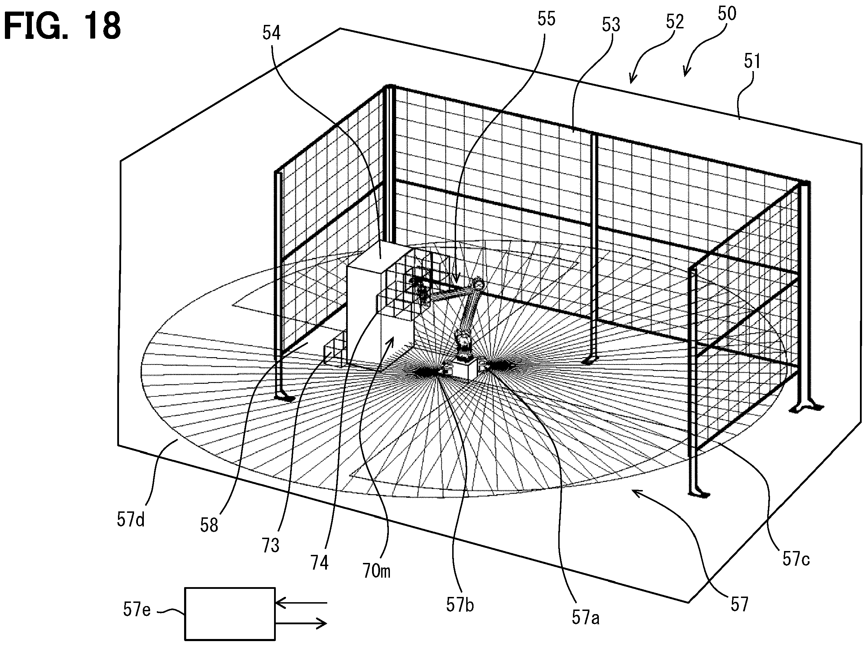

FIG. 18 is an example of an image displayed on the display device 31. The drawing includes the basic image 50, the added safety control device 57, and a modified reach area 70m. The added safety control device 57 changes the reach area of the target person. In the illustrated example, the safety control device 57 is installed and functions, so that the reach area changes from the reach area 70 shown in FIG. 11 to the reach area 70m shown in FIG. 18. Since the safety control device 57 restricts the operation of the movable facility 55, entering opportunities of the target person into the safety distance of the movable facility 55 are reduced. Therefore, the change from the reach area 70 to the reach area 70m results in a significant decrease in the reach area.

Furthermore, the support apparatus 1 is configured to consider a blind spot 58 of the safety control device 57. In the illustrated example, the blind spot 58 is formed behind the processing machine 54 with respect to a view from the intrusion sensors 57a and 57b, where the intrusion sensors 57a and 57b cannot detect the target person. If the facility is equipped with the safety control device 57 of an optical type, the support apparatus 1 identifies the blind spot 58 that occurs if light is blocked. The blind spot 58 is identified behind the facilities by the support apparatus 1 executing a ray casting algorithm. The ray casting algorithm identifies the blind spot 58 by simulating light from the intrusion sensors. The blind spot 58 is reflected in the process of determining the reach area of the target person.

In the illustrated example, a part of the walking area of the target person exists in the blind spot 58. Therefore, the support apparatus 1 additionally determines a reach area 73 behind the processing machine 54. Concomitant with the reach area 73, side routes by which the target person approaches the movable facility 55 from behind the processing machine 54 via both sides of the processing machine 54 are taken into account in determining the reach area 70m. As a result, the reach area 70m is determined to include the reach area 74 that protrudes from sides of the processing machine 54. The side routes allows rapid access to the movable facility 55 from behind the processing machine 54. Therefore, the side routes are not deleted and are reflected in the determination of the reach area 70m even in the branch and bound method. Here, a case has been described in which a virtual barrier such as the safety control device 57 is additionally provided to the secondary facilities data. It should be noted that the virtual barriers, such as the safety control device 57, may also be included in the primary facilities data. Therefore, the explanation here also applies to the primary facilities data.

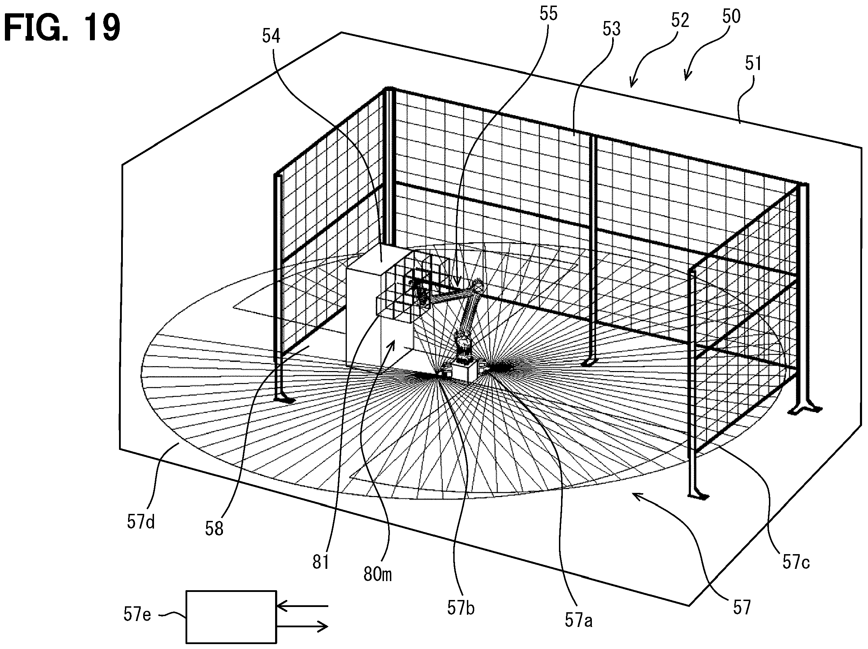

FIG. 19 is an example of an image displayed on the display device 31. The drawing includes the basic image 50, the added safety control device 57, and a modified transient contact risk area 80m. In the illustrated example, the transient contact risk area is changed from the transient contact risk area 80 illustrated in FIG. 12 to the transient contact risk area 80m illustrated in FIG. 19. Since the safety control device 57 restricts the operation of the movable facility 55, entering opportunities of the target person into the safety distance of the movable facility 55 are reduced. Therefore, the change from the transient contact risk area 80 to the transient contact risk area 80m results in a significant reduction in the transient contact risk area. On the other hand, the transient contact risk area 80m is determined to include the transient contact risk area 81 protruding to sides of the processing machine 54 by reflecting the side routes from the blind spot 58.

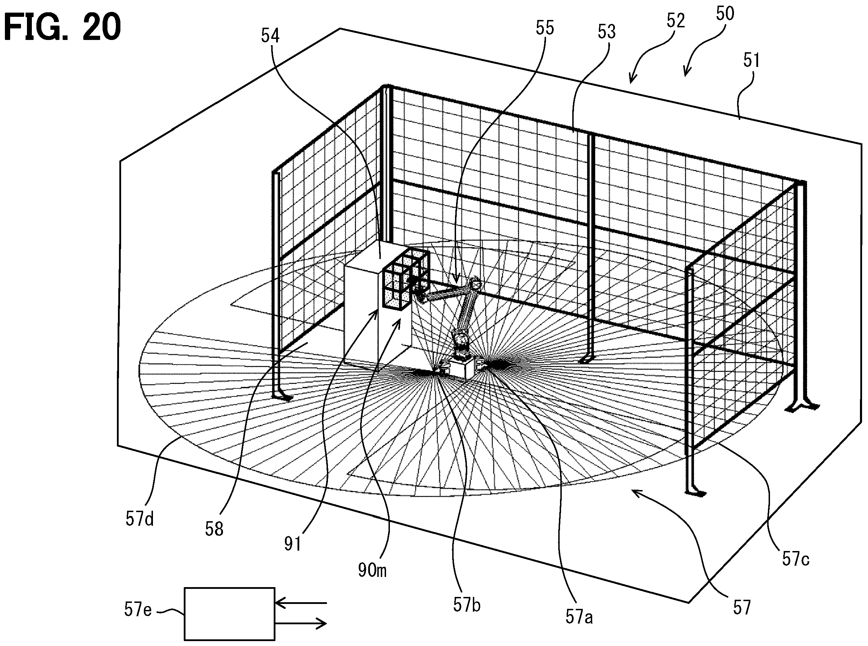

FIG. 20 is an example of an image displayed on the display device 31. The drawing includes the basic image 50, the added safety control device 57, and a modified quasi-static contact risk area 90m. In the illustrated example, the quasi-static contact risk area is changed from the quasi-static contact risk area 90 illustrated in FIG. 13 to the quasi-static contact risk area 90m illustrated in FIG. 20. Since the safety control device 57 restricts the operation of the movable facility 55, entering opportunities of the target person into the safety distance of the movable facility 55 are reduced. Therefore, the change from the quasi-static contact risk area 90 to the quasi-static contact risk area 90m results in a significant reduction in the quasi-static contact risk area. In this embodiment, the quasi-static contact risk area 90m includes only the first group 91. The support apparatus 1 determines that the transient contact cannot occur at positions of the second group 92 due to additional installation of the safety control device 57. Further, the support apparatus 1 determines that the quasi-static contact cannot occur at positions of the second group 92.

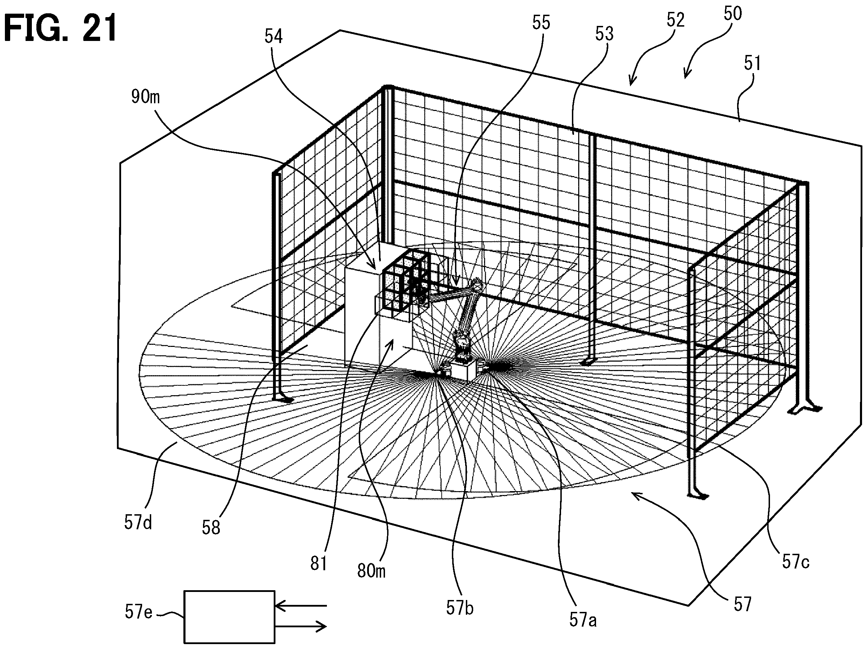

FIG. 21 is an example of an image displayed on the display device 31. The drawing includes the basic image 50, the added safety control device 57, the transient contact risk area image 80m, and the quasi-static contact risk area image 90m. The support apparatus 1 displays the transient contact risk area image 80m and the quasi-static contact risk area image 90m in the facilities including the added safety control device 57. In this case, the reach determination unit 25b, the motion determining unit 25c, the risk determining unit 25d, and the display process unit 25f are configured and work to display both the transient contact risk area image 80m and the quasi-static contact risk area image 90m in an overlapping manner and in a distinguishable manner. As a result, the evaluator can improve the facilities on the support apparatus 1 and recognizes the effects of the improvement.

In the support apparatus 1 of this embodiment, the safety control device 57 can be additionally set on the display device 31. The support apparatus 1 causes the safety control device 57 to function in a simulated manner on the display device 31. As a result, the evaluator can improve the facilities in the support apparatus 1 and evaluate the effects of the improved facilities without returning to the facilities design device.

Modifications to the facilities may be implemented by changing dynamic data of the movable members of the facilities. Changing the dynamic data includes changing the moving direction of the movable member, changing the moving speed of the movable member, changing the planned track of the movable member, and the like. Changing the dynamic data of the facilities include changing the shape of the movable member, changing the weight of the movable member, and the like. Changing the dynamic data of the facilities involve removal of a movable member. Changing the dynamic data of the facilities involve adding of a movable member.

The step 311 provides the modification unit. Therefore, the control apparatus 2 is configured to provide the modification unit 25g that modifies the facilities data acquired in the step 201 as the data acquisition unit and generates modified facilities data. In steps 302, 303, 304 and 305, which is executed after the step 311, the reach determination unit, the motion determination unit, the risk determination unit, and the display process unit are configured to function based on the modified facilities data.

In the steps 302-304, the process in the steps 202-204 are executed based on the modified facilities data. A step 302 provides the facilities data acquisition unit 25a that acquires facilities data of the modified facilities. A step 303 provides the reach determining unit 25b which determines the reach area of the target person in the modified facilities. The step 304 provides the motion determination unit 25c that determines a motion area in the modified facilities. A step 304 provides the risk determination unit 25d that determines the risk area in the modified facilities. Furthermore, the step 304 provides the physical quantity calculation unit 25e that calculates a physical quantity of interference in the modified facilities.

In a step 312, the support apparatus 1 calculates the cycle time of the facilities based on the modified facilities data. The step 312 provides a cycle time calculation unit. Therefore, the control device 2 is configured to provide a cycle time calculation unit 25h that calculates the cycle time of the modified facilities based on the modified facilities data.

If the safety control equipment including the intrusion sensor and the safety control process is changed or added in the step 311, a cycle time is recalculated in the step 312. In this case, the detection area of the intrusion sensor includes a deceleration area for decelerate the facilities and a stop area for stop the facilities. The deceleration area is an area to decelerate the movable members of the facilities if the safety control equipment installed by the evaluator detects an intrusion of the target person. The stop area is an area to stop the movable members of the facilities if the safety control equipment installed by the evaluator detects an intrusion of the target person. In the step 312, the deceleration area and the stop area may be defined according to conditions of the evaluator. In the step 312, the evaluator defines a time ratio between if the target person is present in the deceleration area and if the target person is present in the stop area. As a result, in the step 312, it is possible to execute a process of calculating a cycle time according to this time ratio.

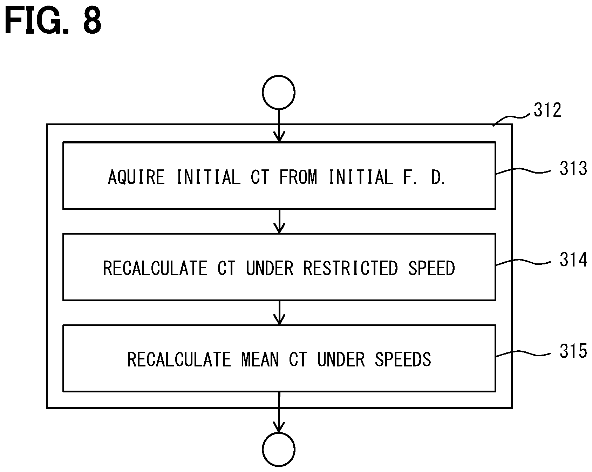

The step 312 includes multiple steps 313, 314, and 315 illustrated in FIG. 8. In the step 313, the support apparatus 1 acquires an initial cycle time (CT) from the initial equipment data. The initial cycle time is a value set when designing the facilities. The initial cycle times may be included in the initial facilities data, for example. Alternatively, the initial cycle time may be calculated as a facilities operating time to process any unit task, e.g., based on the initial facilities data. In the step 314, the support apparatus 1 recalculates the CT under a circumstance limiting speed. The support apparatus 1 recalculates an increased cycle time due to a decrease in speed of the facilities. For example, assume that the facility is a multi-joint robot. In this case, the support apparatus 1 recalculates cycle time increased due to a decrease in at least one angular speed. Alternatively, the support apparatus 1 recalculates CT increased due to a decrease in a TCP (Tool Center Point) speed. Furthermore, the support apparatus 1 may support both of these recalculations. "Recalculation of cycle time increased due to a decrease in an angular speed" includes (i) a step of calculating a reduction ratio from a non-reduced angular speed and a reduced angular speed, (ii) a step of adjusting a number of time steps according to the reduction rate, and (iii) a step of calculating a cycle time by number of time steps and a unit time step time in a period where a speed is decreased. "Recalculation of cycle time increased due to a decrease in TCP speed" includes (i) a step of calculating a reduction ratio from a non-reduced TCP speed and a reduced TCP speed, (ii) a step of adjusting an angular speed and number of time steps based on the reduction ratio, and (iii) a step of calculating a cycle time by number of time steps and a unit time step time in a period where a speed is decreased.

If the safety control device adjusts a speed of the facility in a stepping manner or in a continuous manner, the cycle time is calculated as an effective cycle time. In the step 315, the support apparatus 1 recalculates an average CT under a plurality of speeds. Here, a speed of the facility may be adjusted in two stages, for example, a high-speed operation and a stopped operation. Further, a speed of the facility may be adjusted in three stages, for example, a high-speed operation, a reduced operation, and a stopped operation. A reduction rate in the reduced operation may be set to an arbitrary reduction rate, and for example, reduction of 10% or 50% is possible. Further, a speed of the facility may be adjusted continuously, for example from a high-speed operation to a low-speed operation. Types of these speed limits may be selected depending on types of intrusion sensors. The effective cycle time is calculated based on a ratio of time (time ratio) in which the facility is operated under a plurality of speeds including a stopped state. The time ratio may be set by a user of the facility, including the evaluator. The time ratio may be set, for example, based on an operating performance in the test bed. The time ratio is set for each of the plurality of speeds including a stop. A use of the time ratio is suitable for collaborative environments such as human-robot collaborative environments. This is because the facility is frequently slowed down and stopped to protect human in the collaborative environment. The effective cycle time (CTsp) is calculated from the initial cycle time (CT0), the speed ratios of the plurality of speeds in the operating state (Sn), and the time ratio (Pn) of an operating time at the plurality of speeds including the stopped state.

As an example, it is assumed that the safety control device adjusts speed of the facility into three stages: a high-speed operation, a reduced-speed operation, and a stopped operation. In this case, it is assumed that a speed of 100 (%) is achieved during the high-speed operation, and a speed of 50 (%) is achieved during the reduced-speed operation. The high-speed operation is represented by a speed rate S1 and a time ratio P1. The reduced-speed operation is represented by a speed rate S2 and a time ratio P2. The stopped operation is represented by a speed rate S3 and a time ratio P3. In this case, the effective cycle time CTsp is calculated from the formula CTsp=CTmean+CTstop=CTmean+CTmean×(Pstop/ΣPwithoutstop). Note that CTmean is an average cycle time in the operating state excluding the stopped state, CTstop is time of the stopped operation, Pstop is the time ratio of the stopped operation, and ΣPwithoutstop is the sum of the time ratios of the operating state excluding the stopped operation. In this case, the average cycle time CTmean is calculated from the formula CTmean=CT0/S1×P1/(P1+P2)+CT0/S2×P2/(P2+P1). Furthermore, the stopped operation time CTstop is calculated from the formula CTstop=CTmean×P3/(P1+P2). The effective cycle time CTsp is calculated from the formula CTsp=CTmaen+CTstop as the sum of the average cycle time CTmean and the stopped operation time CTstop.

Return to FIG. 6, in the steps 305-307, the processes in the steps 205-207 are executed based on the modified facilities data. The step 305 provides the display process unit 25f which displays support information for the modified facilities. In the step 307, the output of the final information is for the modified facilities data. That is, the support apparatus 1 outputs a result of the risk assessment procedure for the facilities improved in the step 311.

According to the embodiment described above, the support apparatus 1 can display an image of the facilities and an image of a risk area where interference between the facilities and the target person is assumed in an overlapping manner on the display device 31. The evaluator can visually and intuitively know the presence of risk and the position of risk in the facilities. Therefore, the support apparatus 1 can provide the evaluator with useful information for safety design. Furthermore, the image displayed on the display device 31 is displayed as a 3D image that three-dimensionally represents the positions and shapes of the facilities in the target evaluation space. Therefore, it can help the evaluator's understanding. The evaluator can visually recognize the facilities displayed and the risk area displayed in an overlapping manner as a 3D image, thereby the evaluator can understand the position of the risk with respect to the facilities in a relative manner.

Furthermore, the risk area includes the transient contact risk area and the quasi-static contact risk area. The support apparatus 1 displays the transient contact risk area and the quasi-static contact risk area in a distinguishing manner on the display device 31. Therefore, the evaluator can understand the positions of the transient contact risk area and the quasi-static contact risk area.

Further, the support apparatus 1 calculates a physical quantity indicating a degree of interference and displays it on the display device 31. Therefore, the evaluator can know the degree of interference as numerical information. Moreover, the degree of interference is displayed both in the case of transient contact and in the case of quasi-static contact. Therefore, the evaluator can know both the degree of transient contact and the degree of quasi-static contact as numerical information.

The support apparatus 1 itself can accept modification to the facilities data, and can execute determination for a risk area and process for support information based on modified facilities data. Therefore, there is no need to go back to the facilities design device and repeat the facilities design. According to this embodiment, the facilities can be modified in the support apparatus 1. Moreover, after modifying the facilities, support information regarding the modified facilities can be displayed and the risk assessment procedure can be continued. In addition, after the support information is once displayed on the support apparatus 1, it is possible to modify the facilities on the support apparatus 1 and display support information regarding the modified facilities again. In this way, the support apparatus 1 can provide functions suitable for repeating risk assessment procedures.

Furthermore, if the facilities are modified, the support apparatus 1 calculates a cycle time according to the modified facilities and displays it on the display device 31. Therefore, the evaluator can know an efficiency of the modified facilities.

### Other Embodiments

The disclosure in this specification, the drawings, and the like is not limited to the exemplified embodiments. The disclosure includes the illustrated embodiments and variations thereof by those skilled in the art. For example, the present disclosure is not limited to the combinations of components and/or elements shown in the embodiments. The disclosure may be provided in various combinations. The disclosure may include additional portions that can be added to the embodiments. The disclosure includes those in which the components and/or elements of the embodiments are omitted. The disclosure includes the reallocation or combination of components and/or elements between one embodiment and another embodiment. The disclosed technical scope is not limited to the descriptions of the embodiments. It should be understood that part of disclosed technical scope is indicated by recitation of claims, and includes every modification within the equivalent meaning and the recitation of the scope of claims.

The disclosure in the specification, drawings and the like is not limited by the description of the claims. The disclosures in the specification, the drawings, and the like encompass the technical ideas described in the claims, and further extend to a wider variety of technical ideas than those in the claims. Therefore, various technical ideas can be extracted from the disclosure of the specification, the drawings and the like without being limited to the description of the claims.

### (Disclosure of Technical Idea)

This description discloses a plurality of technical concepts described in a plurality of sections listed below. Some sections may be presented in a multiple dependent form in which a subsequent section refers to the preceding sections selectively. Moreover, some sections may be written in a multiple dependent form referring to another multiple dependent form. These sections written in the multiple dependent form define a plurality of technical concepts.

### (Technical Idea 1)

An apparatus for supporting a safety design of facilities, the apparatus comprising:
a control device (2) having at least one processor;
a display device (31) which displays display content controlled by the control device; and
an input device (4) which inputs data to the control device, wherein
the control device is configured to provide:
   a facilities data acquisition unit (25a) which acquires facilities data of facilities in target evaluation space from the input device;
   a reach determination unit (25b) which determines a reach area that a target person can reach in the target evaluation space based on the facilities data;
   a motion determination unit (25c) which determines a motion area indicating movement of the facilities based on the facilities data;
   a risk determination unit (25d) which determines a risk area where interference between the facilities and the target person is expected; and
   a display process unit (25f) which displays the facilities arranged in the target evaluation space and the risk area in the target evaluation space in an overlapping manner on the display device, and wherein the interference includes a transient contact in which the facility and the target person come into contact with each other transiently, and a quasi-static contact in which the facility and the target person come into contact with each other in a quasi-static manner, and wherein
   the risk area includes a transient contact risk area where the transient contact is assumed and a quasi-static contact risk area where the quasi-static contact is assumed, and wherein
   the display process unit is configured to display the transient contact risk area and the quasi-static contact risk area in an overlapping manner and in a distinguishable manner.

### (Technical Idea 2)

The apparatus according to technical idea 1, wherein the control device is configured to further provide a physical quantity determination unit which determines a physical quantity that the target person receives due to the interference, and wherein
the display process unit is configured to further display the physical quantity in the interference.

### (Technical Idea 3)

The apparatus according to Technical Idea 1 or 2, wherein the display processing unit is configured to further display the reach area and/or the motion area in addition to the facilities and the risk area, and wherein
the display process unit is configured to display at least two areas that are displayed simultaneously in a distinguishable manner by human vision.

### (Technical Idea 4)

The apparatus according to any one of Technical Ideas 1-3, wherein the control device is configured to further provide a display switch unit which switches between displaying or non-displaying of at least one of the facilities, the reach area, the motion area, and the risk area.

### (Technical Idea 5)

The apparatus according to any one of Technical Ideas 1-4, wherein the control device is configured to further provide a modification unit (25g) which modifies the facilities data acquired by the facilities data acquisition unit and generates modified facilities data, and wherein
the reach determination unit, the motion determination unit, the risk determination unit, and the display process unit are configured to function based on the modified facilities data.

### (Technical Idea 6)

The apparatus according to Technical Idea 5, wherein the modification unit is configured to generate a modified facilities data in which a protection device, which includes a physical barrier and/or a virtual barrier and protects the target person from the interference, is added to the facilities data, and wherein
the reach determination unit, the motion determination unit, the risk determination unit, and the display process unit are configured to display, based on the modified facilities data, the transient contact risk area and the quasi-static contact risk area in an overlapping manner and in a distinguishable manner on the modified facilities including the protective device.

### (Technical Idea 7)

The apparatus according to Technical Idea 5 or 6, wherein the control device is configured to further provide a cycle time calculation unit (25h) which calculates a cycle time for the modified facilities based on the modified facilities data.

### (Technical Idea 8)

The apparatus according to any one of Technical Ideas 1-7, wherein the reach determination unit is configured to: set a plurality of entry points in a walking area, where the target person can walk into, in the facilities; and determine the reach area by searching a plurality of routes through which the target person can go to the motion area from each of the entry points using a branch and limit method.

The features described in Technical Ideas 1 to 8 may be understood as features of technical ideas depending upon any one of the invention of computer implemented method, the invention of program, and the invention of storage medium.

### (Technical Idea 9)

A method for supporting safety design of facilities, executed in a control device (2) having at least one processor, the method comprising:
acquiring facilities data of facilities in a target evaluation space from an input device;
determining a reach area that a target person can reach in the target evaluation space based on the facilities data;
determining a motion area indicating movement of the facilities based on the facilities data;
determining a risk area where interference between the facilities and the target person is expected; and
displaying the facilities arranged in the target evaluation space and the risk area in the target evaluation space in an overlapping manner on a display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the displaying displays the transient contact risk area and the quasi-static contact risk area in an overlapping manner and in a distinguishable manner on the display device.

### (Technical Idea 10)

A program including computer-readable instructions executable by a processor of an apparatus for supporting a safety design of facilities, the instructions being configured to, when executed by the processor, cause the apparatus to function as:
a facilities data acquisition unit (25a) which acquires facilities data of facilities in target evaluation space from the input device;
the reach determination unit (25b) which determines a reach area that a target person can reach in the target evaluation space based on the facilities data;
a motion determination unit (25c) which determines a motion area indicating movement of the facilities based on the facilities data;
a risk determining unit (25d) which determines a risk area where interference between the facilities and the target person is expected; and
a display process unit (25f) which displays the facilities arranged in the target evaluation space and the risk area in the target evaluation space in an overlapping manner on the display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the instructions are configured to cause the display process unit to display the transient contact risk area and the quasi-static contact risk area in an overlapping manner and in a distinguishable manner.

### (Technical Idea 11)

A non-transitory computer-readable storage medium storing computer-readable instructions executable by a processor of an apparatus for supporting a safety design of facilities, the instructions being configured to, when executed by the processor, cause the apparatus to:
acquire facilities data of facilities in a target evaluation space from an input device;
determine a reach area that a target person can reach in the target evaluation space based on the facilities data;
determining a motion area indicating movement of the facilities based on the facilities data;
determine a risk area where interference between the facilities and the target person is expected; and
display the facilities arranged in the target evaluation space and the risk area in the target evaluation space in an overlapping manner on a display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the instructions are configured to cause the display process unit to display the transient contact risk area and the quasi-static contact risk area in an overlapping manner and in a distinguishable manner.

### REFERENCE SIGNS LIST

1 Support apparatus
2 Control device
21 Memory
22 Processor
25 Control process
3 Output device
31 Display device
4 Input device
41 HMI device
42 Facilities data input device.

## Claims

1. An apparatus for supporting a safety design of facilities, the apparatus comprising:
a control device (2) having at least one processor;
a display device (31) which displays display content controlled by the control device; and
an input device (4) which inputs data to the control device, wherein
the control device is configured to provide:
a facilities data acquisition unit (25a) which acquires facilities data of facilities in target evaluation space from the input device;
a reach determination unit (25b) which determines a reach area that a target person can reach in the target evaluation space based on the facilities data;
a motion determination unit (25c) which determines a motion area indicating movement of the facilities based on the facilities data;
a risk determination unit (25d) which determines a risk area where interference between the facilities and the target person is expected; and
a display process unit (25f) which displays the facilities arranged in the target evaluation space and the risk area in the target evaluation space in an overlapping manner on the display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the display process unit is configured to display the transient contact risk area and the quasi-static contact risk area in an overlapping manner and in a distinguishable manner.

2. The apparatus according to claim 1, wherein
the control device is configured to further provide a physical quantity determination unit which determines a physical quantity that the target person receives due to the interference, and wherein
the display process unit is configured to further display the physical quantity in the interference.

3. The apparatus according to claim 1 or 2, wherein
the display process unit is configured to further display the reach area and/or the motion area in addition to the facilities and the risk area, and wherein
the display process unit is configured to display at least two areas that are displayed simultaneously in a distinguishable manner by human vision.

4. The apparatus according to any one of claims 1-3, wherein
the control device is configured to further provide a display switch unit which switches between displaying or non-displaying of at least one of the facilities, the reach area, the motion area, and the risk area.

5. The apparatus according to any one of claims 1-4, wherein
the control device is configured to further provide a modification unit (25g) which modifies the facilities data acquired by the facilities data acquisition unit and generates modified facilities data, and wherein
the reach determination unit, the motion determination unit, the risk determination unit, and the display process unit are configured to function based on the modified facilities data.

6. The apparatus according to claim 5, wherein
the modification unit is configured to generate a modified facilities data in which a protection device, which includes a physical barrier and/or a virtual barrier and protects the target person from the interference, is added to the facilities data, and wherein
the reach determination unit, the motion determination unit, the risk determination unit, and the display process unit are configured to display, based on the modified facilities data, the transient contact risk area and the quasi-static contact risk area in an overlapping manner and in a distinguishable manner on the modified facilities including the protective device.

7. The apparatus according to claim 5 or 6, wherein
the control device is configured to further provide a cycle time calculation unit (25h) which calculates a cycle time for the modified facilities based on the modified facilities data.

8. The apparatus according to any one of claims 1-7, wherein
the reach determination unit is configured to:
set a plurality of entry points in a walking area, where the target person can walk into, in the facilities; and
determine the reach area by searching a plurality of routes through which the target person can go to the motion area from each of the entry points using a branch and limit method.

9. A computer implemented method for supporting safety design of facilities, executed in a control device (2) having at least one processor, the method comprising:
acquiring facilities data of facilities in a target evaluation space from an input device;
determining a reach area that a target person can reach in the target evaluation space based on the facilities data;
determining a motion area indicating movement of the facilities based on the facilities data;
determining a risk area where interference between the facilities and the target person is expected; and
displaying the facilities arranged in the target evaluation space and the risk area in the target evaluation space in an overlapping manner on a display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the displaying display the transient contact risk area and the quasi-static contact risk area in an overlapping and in a distinguishable manner on the display device.

10. A non-transitory computer-readable storage medium storing computer-readable instructions executable by a processor of an apparatus for supporting a safety design of facilities, the instructions being configured to, when executed by the processor, cause the apparatus to:
acquire facilities data of facilities in a target evaluation space from an input device;
determine a reach area that a target person can reach in the target evaluation space based on the facilities data;
determining a motion area indicating movement of the facilities based on the facilities data;
determine a risk area where interference between the facilities and the target person is expected; and
display the facilities arranged in the target evaluation space and the risk area in the target evaluation space in an overlapping manner on a display device, and wherein
the interference includes a transient contact in which the facility and the target person come into contact with each other transiently, and a quasi-static contact in which the facility and the target person come into contact with each other in a quasi-static manner, and wherein
the risk area includes a transient contact risk area where the transient contact is assumed and a quasi-static contact risk area where the quasi-static contact is assumed, and wherein
the instructions are configured to cause the display process unit to display the transient contact risk area and the quasi-static contact risk area in an overlapping manner and in a distinguishable manner.
